# EUROPEAN PATENT APPLICATION

(11) **EP 4 845 008 A1**
(43) Date of publication of application: **25.11.2026**
(21) Application number: 24921583.1
(22) Date of filing: 31.10.2024
(51) Int. Cl.: H02M 1/32

(54) **SWITCHED CAPACITOR ASSEMBLY, VOLTAGE CONVERSION CIRCUIT AND ELECTRONIC DEVICE**

(30) Priority: 31.01.2024 CN 202410144641
(71) Applicant: Huawei Technologies Co., Ltd., Shenzhen, Guangdong 518129 (CN)
(72) Inventor: CHEN, Bin, Shenzhen, Guangdong 518129 (CN); QIN, Junliang, Shenzhen, Guangdong 518129 (CN); YANG, Feng, Shenzhen, Guangdong 518129 (CN); WANG, Ning, Shenzhen, Guangdong 518129 (CN); GUO, Jine, Shenzhen, Guangdong 518129 (CN)
(74) Representative: Huawei European IPR
(86) International application number: PCT/CN2024/128813
(87) International publication number: WO 2025/161559

(57) **Abstract**

This application discloses a switched-capacitor assembly, a voltage conversion circuit, and an electronic device, to enhance dynamic performance and a response rate. The switched-capacitor assembly includes Q switched-capacitor modules, where input ends of the Q switched-capacitor modules are connected in parallel to serve as an input end of the switched-capacitor assembly, and output ends of the Q switched-capacitor modules are connected in parallel to serve as an output end of the switched-capacitor assembly. In addition, the switched-capacitor module includes N switched-capacitor circuits, where input ends of the N switched-capacitor circuits are connected to an input end of the switched-capacitor module, and output ends of the N switched-capacitor circuits are connected to an output end of the switched-capacitor module. In addition, the output end of the switched-capacitor assembly is configured to connect to a load. Controlling the switched-capacitor circuit to operate based on a switching frequency can enhance dynamic performance and a response rate, and reduce output capacitance in the switched-capacitor circuit, thereby reducing costs, a board area, and a product volume.

## Description

### CROSS-REFERENCE TO RELATED APPLICATIONS

This application claims priority to Chinese Patent Application No. 202410144641.8, filed with the China National Intellectual Property Administration on January 31, 2024 and entitled "SWITCHED-CAPACITOR ASSEMBLY, VOLTAGE CONVERSION CIRCUIT, AND ELECTRONIC DEVICE", which is incorporated herein by reference in its entirety.

### TECHNICAL FIELD

This application relates to the field of electronic product technologies, and in particular, to a switched-capacitor assembly, a voltage conversion circuit, and an electronic device.

### BACKGROUND

With development of information technologies, data increases exponentially, which poses stricter requirements on data processing capabilities. Therefore, chips such as a central processing unit (central processing unit, CPU) and a graphics processing unit (Graphic Processing Unit, GPU) used in a computer system are required to provide high-performance processing and computational power. When power is supplied to these chips, voltages at load input ends of the chips are usually affected by various factors, resulting in a significant drop and overshoot. This affects performance of the chips and even an entire computer system, and reduces power supply efficiency. To solve this problem, a power supply of the computer system quickly responds to the voltage drop and overshoot, thereby dynamically adjusting an output voltage to a target voltage. In the conventional technology, a power supply usually uses a buck circuit based on a switched-capacitor circuit to dynamically adjust a voltage. However, as performance of a chip in a computer system is improved, requirements for dynamic performance and a response rate of the power supply are increasingly high, and it is increasingly difficult for a conventional switched-capacitor circuit and a corresponding power supply to meet the requirements. Therefore, a new power supply method is required to further improve the dynamic performance and the response rate.

### SUMMARY

Embodiments of this application provide a switched-capacitor assembly, a voltage conversion circuit, and an electronic device, to enhance dynamic performance and a response rate.

According to a first aspect, an embodiment of this application provides a switched-capacitor assembly. The switched-capacitor assembly includes Q switched-capacitor modules, where input ends of the Q switched-capacitor modules are connected in parallel to serve as an input end of the switched-capacitor assembly, and output ends of the Q switched-capacitor modules are connected in parallel to serve as an output end of the switched-capacitor assembly. In addition, the switched-capacitor module includes N switched-capacitor circuits, where input ends of the N switched-capacitor circuits are connected to an input end of the switched-capacitor module, and output ends of the N switched-capacitor circuits are connected to an output end of the switched-capacitor module. In addition, the output end of the switched-capacitor assembly is configured to connect to a load.

The Q switched-capacitor modules can be configured to respond to interleaved control, and a reciprocal of current change time of the load is less than Q*N*Fsw. In this way, by enabling the Q switched-capacitor modules to achieve interleaved parallel operation, the switched-capacitor assembly can implement output current multiplication, thereby creating an ideal current multiplier. This enables the switched-capacitor assembly to output a high current, reduces delay time of a loop response, and improves dynamic performance. In addition, when the switched-capacitor assembly is used in a power supply scenario of a low-voltage high-current computing system, during interleaved control on the Q switched-capacitor modules, the current of the load changes very rapidly. In this case, a capability at an input side needs to be transferred to an output side as quickly as possible. As a higher switching frequency results in faster energy conversion, there is a specific relationship between the switching frequency and the current change time. Therefore, when the Q switched-capacitor modules perform interleaved control, the reciprocal of the current change time of the load may be limited to be less than Q*N*Fsw, so that the switching frequency of the switched-capacitor circuit can be obtained. The switched-capacitor circuit is controlled to operate based on the switching frequency, so that the switched-capacitor assembly can respond to voltage conversion in a timely manner, thereby enhancing dynamic performance and a response rate. In addition, controlling the switched-capacitor circuit to operate based on the switching frequency can enhance dynamic performance and a response rate, and reduce output capacitance in the switched-capacitor circuit, thereby further reducing costs, a board area, and a product volume.

Alternatively, the Q switched-capacitor modules may also be configured to respond to non-interleaved control, and a reciprocal of current change time of the load is less than N*Fsw. In this way, by enabling the Q switched-capacitor modules to achieve non-interleaved parallel operation, the switched-capacitor assembly can implement output current multiplication, thereby creating an ideal current multiplier. This enables the switched-capacitor assembly to output a high current, reduces delay time of a loop response, and improves dynamic performance of a chip. In addition, when the switched-capacitor assembly is used in a power supply scenario of a low-voltage high-current computing system, during non-interleaved control on the Q switched-capacitor modules, the current of the load changes very rapidly. In this case, a capability at an input side needs to be transferred to an output side as quickly as possible. As a higher switching frequency results in faster energy conversion, there is a specific relationship between the switching frequency and the current change time. Therefore, when the Q switched-capacitor modules perform non-interleaved control, the reciprocal of the current change time of the load may be limited to be less than N*Fsw, so that the switching frequency of the switched-capacitor circuit can be obtained. The switched-capacitor circuit is controlled to operate based on the switching frequency, so that the switched-capacitor assembly can respond to voltage conversion in a timely manner, thereby enhancing dynamic performance and a response rate. In addition, controlling the switched-capacitor circuit to operate based on the switching frequency can enhance dynamic performance and a response rate, and reduce output capacitance in the switched-capacitor circuit, thereby further reducing costs, a board area, and a product volume.

Q is an integer and Q≥1, N is an integer and N≥1, and Fsw represents a switching frequency of the switched-capacitor circuit.

In some embodiments, the switched-capacitor circuit is a resonant switched-capacitor circuit. In this way, a loss can be reduced during buck conversion, and an output voltage can be fine-tuned.

In some embodiments, the resonant switched-capacitor circuit includes a first switching transistor, a second switching transistor, a third switching transistor, a third switching transistor, an energy storage capacitor, a first filter capacitor, a second filter capacitor, and an inductor. A control electrode of the first switching transistor is configured to receive a first switching signal, a first electrode of the first switching transistor is connected to a positive input end in input ends of the resonant switched-capacitor circuit and a first electrode of the first filter capacitor, and a second electrode of the first switching transistor is connected to a first electrode of the second switching transistor and a first electrode of the energy storage capacitor. A control electrode of the second switching transistor is configured to receive a second switching signal, and a second electrode of the second switching transistor is connected to a first electrode of the third switching transistor and a first end of the inductor. A control electrode of the third switching transistor is configured to receive a third switching signal, and a second electrode of the third switching transistor is connected to a first electrode of the fourth switching transistor and a second electrode of the energy storage capacitor. A control electrode of the fourth switching transistor is configured to receive a fourth switching signal, and a second electrode of the fourth switching transistor is connected to a second electrode of the second filter capacitor and a negative input end in the input ends of the resonant switched-capacitor circuit. A second electrode of the first filter capacitor is connected to a first electrode of the second filter capacitor and a second end of the inductor. In this way, a resonant switched-capacitor circuit with a simple structure can be implemented, so that the resonant switched-capacitor circuit is easy to use. Therefore, not only a loss can be reduced and an output voltage can be fine-tuned, but also production costs can be reduced.

In some embodiments, the resonant switched-capacitor circuit includes a first switching transistor, a second switching transistor, a third switching transistor, a third switching transistor, an energy storage capacitor, a first filter capacitor, a second filter capacitor, and an inductor. A control electrode of the first switching transistor is configured to receive a first switching signal, a first electrode of the first switching transistor is connected to a positive input end in input ends of the resonant switched-capacitor circuit and a first electrode of the first filter capacitor, and a second electrode of the first switching transistor is connected to a first electrode of the second switching transistor and a first end of the inductor. A second end of the inductor is connected to a first electrode of the energy storage capacitor, a control electrode of the second switching transistor is configured to receive a second switching signal, and a second electrode of the second switching transistor is connected to a first electrode of the third switching transistor, a second electrode of the first filter capacitor, and a first electrode of the second filter capacitor. A control electrode of the third switching transistor is configured to receive a third switching signal, and a second electrode of the third switching transistor is connected to a first electrode of the fourth switching transistor and a second electrode of the energy storage capacitor. A control electrode of the fourth switching transistor is configured to receive a fourth switching signal, and a second electrode of the fourth switching transistor is connected to a second electrode of the second filter capacitor and a negative input end in the input ends of the resonant switched-capacitor circuit. In this way, another resonant switched-capacitor circuit with a simple structure can be implemented, so that the resonant switched-capacitor circuit is easy to use. Therefore, not only a loss can be reduced and an output voltage can be fine-tuned, but also production costs can be reduced.

In some embodiments, the switched-capacitor circuit may alternatively be a non-resonant switched-capacitor circuit. In this way, a non-resonant switched-capacitor circuit with a simple structure can be implemented. In addition, during an actual application, a circuit structure of the non-resonant switched-capacitor circuit is mature. The switched-capacitor circuit in this application is disposed as the non-resonant switched-capacitor circuit, thereby being simple to implement, and reducing design difficulty and production costs.

According to a second aspect, an embodiment of this application further provides a voltage conversion circuit, where the voltage conversion circuit includes a DC-DC conversion circuit and a switched-capacitor assembly, and the switched-capacitor assembly is the switched-capacitor assembly according to the first aspect or the implementations of the first aspect. In addition, an input end of the DC-DC conversion circuit is configured to receive an input voltage, an output end of the DC-DC conversion circuit is connected to the input end of the switched-capacitor assembly, and the output end of the switched-capacitor assembly is configured to connect to the load. In addition, the DC-DC conversion circuit is configured to perform buck conversion on the input voltage and then output a converted voltage to the switched-capacitor assembly, and the switched-capacitor assembly is configured to perform buck conversion on an input voltage and then output a converted voltage to the load. In this way, in the voltage conversion circuit in this embodiment of this application, the DC-DC conversion circuit and the switched-capacitor assembly are disposed, so that the voltage conversion circuit may be formed in a form of two-level architecture. In addition, the voltage conversion circuit in this embodiment of this application may be used in a buck scenario to supply power to the load.

The voltage conversion circuit in this embodiment of this application may be used in a buck scenario. A voltage input by the voltage conversion circuit is usually high. Because the load needs to have a high dynamic response, the voltage conversion circuit needs to transfer the input voltage to the output side as quickly as possible. As a higher switching frequency results in faster energy conversion, a higher switching frequency is required. As a result, a switching loss is high, and efficiency is reduced. In addition, the voltage conversion circuit has a high input voltage, and therefore has a high requirement on withstand voltage performance of the switching transistor (the switching transistor is easily broken down), resulting in high costs. Therefore, in this application, the voltage conversion circuit is formed in a form of two-stage structure, where an input voltage of a first stage (namely, the DC-DC conversion circuit) is high, and an input voltage of a second stage (namely, the switched-capacitor assembly) is low. Because the input voltage of the first stage is high, to reduce a requirement on the withstand voltage performance of the switching transistor, a switching frequency of the first stage may be set to be low. In this way, the requirement on the withstand voltage performance of the switching transistor at the first stage can be reduced, a switching loss of the first stage can be reduced, and system efficiency is improved. However, a plurality of switched-capacitor circuits are disposed at the second stage, and a switching frequency of each switched-capacitor circuit does not need to be additionally increased. By connecting the plurality of switched-capacitor circuits in parallel, the switched-capacitor circuits are controlled to operate, so that an equivalent switching frequency (the equivalent switching frequency is equal to N*Fsw) of the switched-capacitor assembly can be increased, thereby quickly converting a voltage from an input side to an output side, and meeting dynamic performance and a response rate required by the load. In addition, because the switching frequency of each switched-capacitor circuit is not increased, in other words, the switching loss is not increased on the basis of increasing the equivalent switching frequency, it is equivalent to that the switching loss can be further reduced and the efficiency can be improved. Therefore, in this application, the voltage conversion circuit is formed in a form of two-level architecture, so that dynamic performance and a response rate required by the load can be met, and efficiency can be improved.

In some embodiments, the DC-DC conversion circuit is further configured to adjust a voltage at an output end of the DC-DC conversion circuit in response to the voltage at the output end of the DC-DC conversion circuit not meeting a first voltage threshold. In this way, the DC-DC conversion circuit adjusts, based on feedback of the voltage at the output end of the DC-DC conversion circuit, the voltage output by the DC-DC conversion circuit, so as to keep the voltage at the output end of the DC-DC conversion circuit stable through voltage adjustment. In addition, the switched-capacitor assembly is configured to adjust a voltage at the output end of the switched-capacitor assembly in response to the voltage at the output end of the switched-capacitor assembly not meeting a second voltage threshold. In this way, the switched-capacitor assembly adjusts, based on feedback of the voltage at the output end of the switched-capacitor assembly, the voltage output by the switched capacitor assembly, so as to keep the voltage at the output end of the switched capacitor assembly stable through voltage adjustment. Therefore, voltage adjustment is separately performed in combination with the two stages, so that a voltage of the load can be quickly stabilized.

In some embodiments, the DC-DC conversion circuit is further configured to adjust a voltage at an output end of the DC-DC conversion circuit in response to the voltage at the output end of the switched-capacitor assembly not meeting a second voltage threshold. In addition, the switched-capacitor assembly is configured to adjust a voltage at the output end of the switched-capacitor assembly in response to the voltage at the output end of the switched-capacitor assembly not meeting the second voltage threshold. In this way, the DC-DC conversion circuit and the switched-capacitor assembly respectively adjust, based on the feedback of the voltage at the output end of the switched-capacitor assembly, the voltage output by the DC-DC conversion circuit and the switched-capacitor assembly, to separately adjust the voltages in combination with the two stages, so that the load voltage can be quickly stabilized.

In some embodiments, the switched-capacitor assembly can quickly respond to the voltage at the output end of the switched-capacitor assembly, to implement quick adjustment. In this way, although Uout can be adjusted, the switched-capacitor assembly cannot operate at the optimal operating efficiency point. To enable the switched-capacitor assembly to operate at the optimal working efficiency point again, the switched-capacitor assembly is further configured to send a linkage voltage adjustment instruction to the DC-DC conversion circuit in response to adjusting, by the switched-capacitor assembly, the voltage at the output end of the switched-capacitor assembly. In addition, the DC-DC conversion circuit is further configured to adjust the voltage at the output end of the DC-DC conversion circuit in response to the linkage voltage adjustment instruction. In this way, the switched-capacitor assembly is enabled to operate at the optimal power point again through two-level linkage control, thereby improving operating efficiency of the switched-capacitor assembly.

In some embodiments, the switched-capacitor module is further configured to: send a linkage voltage adjustment instruction carrying buck information to the DC-DC conversion circuit in response to adjusting, by the switched-capacitor assembly, the voltage at the output end of the switched-capacitor assembly to decrease. In addition, the DC-DC conversion circuit is further configured to decrease the voltage at the output end of the DC-DC conversion circuit in response to the linkage voltage adjustment instruction carrying the buck information. In this way, because the voltage at the output end of the switched-capacitor assembly is adjusted to decrease, the DC-DC conversion circuit needs to be controlled to decrease the voltage at the output end of the DC-DC conversion circuit, so that the switched-capacitor assembly can operate at the optimal power point again.

In some embodiments, the switched-capacitor module is further configured to send a linkage voltage adjustment instruction carrying boot information to the DC-DC conversion circuit in response to adjusting, by the switched-capacitor assembly, the voltage at the output end of the switched-capacitor assembly to increase. In addition, the DC-DC conversion circuit is further configured to increase the voltage at the output end of the DC-DC conversion circuit in response to the linkage voltage adjustment instruction carrying the boost information. In this way, because the voltage at the output end of the switched-capacitor assembly is adjusted to increase, the DC-DC conversion circuit needs to be controlled to increase the voltage at the output end of the DC-DC conversion circuit, so that the switched-capacitor assembly can operate at the optimal power point again.

In some embodiments, the switched-capacitor assembly is further configured to: in response to the voltage at the output end of the switched-capacitor assembly not meeting the second voltage threshold, control one or more of a phase, a switching frequency, and a duty cycle that correspond to the switched-capacitor circuit to be adjusted from a specified value to a target value and adjust the voltage at the output end of the switched-capacitor assembly; and after the DC-DC conversion circuit adjusts the voltage at the output end of the DC-DC conversion circuit in response to the linkage voltage adjustment instruction, adjust one or more of the phase, the switching frequency, and the duty cycle from the target value to the specified value. In this way, the switched-capacitor assembly can adjust the voltage change at the output end of the switched-capacitor assembly by adjusting the specified value. However, because the switched-capacitor assembly adjusts the voltage at the output end of the switched-capacitor assembly to change, the specified value changes. Therefore, the DC-DC conversion circuit is controlled in a linkage manner to adjust the voltage, so that the target value can be adjusted to the specified value again, and the switched-capacitor module operates at the optimal power point again.

In some embodiments, the DC-DC conversion circuit is further configured to adjust a voltage at an output end of the DC-DC conversion circuit in response to the voltage at the output end of the switched-capacitor assembly not meeting a second voltage threshold. In this way, the DC-DC conversion circuit adjusts, based on the feedback of the voltage at the output end of the switched-capacitor assembly, the voltage output by the DC-DC conversion circuit, so as to keep the voltage at the output end of the DC-DC conversion circuit stable through voltage adjustment, to stabilize the voltage of the load.

In some embodiments, to keep the voltage Uout stable, the switched-capacitor assembly (especially the resonant switched-capacitor circuit) directly adjusts the voltage at the output end of the switched-capacitor assembly. This reduces efficiency of the switched-capacitor assembly, thereby reducing efficiency of the entire voltage conversion circuit. Therefore, the DC-DC conversion circuit is further configured to adjust a voltage at the output end of the DC-DC conversion circuit based on a current at the output end of the switched-capacitor assembly, so that the switched-capacitor assembly obtains a stable voltage through conversion based on an adjusted voltage at the output end of the DC-DC conversion circuit, thereby improving operating efficiency.

In some embodiments, the voltage at the output end of the DC-DC conversion circuit may be further adjusted according to a requirement of the load, so that the voltage at the output end of the switched-capacitor assembly meets the requirement of the load. Therefore, the DC-DC conversion circuit is further configured to adjust a voltage at the output end of the DC-DC conversion circuit based on a current at the output end of the switched-capacitor assembly and a first voltage adjustment instruction output by the load, so that the switched-capacitor assembly obtains a stable voltage through conversion based on an adjusted voltage at the output end of the DC-DC conversion circuit, thereby improving operating efficiency.

For example, the first voltage adjustment instruction may be sent by the load to the DC-DC conversion circuit through a communication connection or physical connection. Alternatively, the first voltage adjustment instruction may be sent by the load to the switched-capacitor assembly through a communication connection or physical connection, and then the switched-capacitor assembly sends the first voltage adjustment instruction to the DC-DC conversion circuit through a communication connection or physical connection.

In some embodiments, the DC-DC conversion circuit may further adjust the voltage at the output end of the DC-DC conversion circuit according to a second voltage adjustment instruction output by the load, and then convert the voltage at the output end of the DC-DC conversion circuit through the switched-capacitor assembly, to meet the requirement of the load.

For example, in a process in which the DC-DC conversion circuit adjusts a voltage according to the second voltage adjustment instruction, the voltage at the output end of the switched-capacitor assembly may be fine-tuned in combination with the foregoing control manner, to improve operating efficiency of the switched-capacitor assembly and improve dynamic performance of the chip.

In some embodiments, the switched-capacitor assembly can adjust the voltage at the output end of the switched-capacitor assembly according to a third voltage adjustment instruction output by the load, to meet the requirement of the load.

For example, in a process in which the switched-capacitor assembly adjusts a voltage according to the third voltage adjustment instruction, the voltage at the output end of the switched-capacitor assembly may alternatively be fine-tuned in combination with the foregoing control manner, to improve operating efficiency of the switched-capacitor assembly and improve dynamic performance of the chip.

In some embodiments, the DC-DC conversion circuit includes an LLC resonant converter or a current doubler rectifier. During an actual application, because a circuit topology of the LLC resonant converter or the current doubler rectifier is mature, the DC-DC conversion circuit in this application is disposed as the LLC resonant converter or the current doubler rectifier, thereby being simple to implement, and reducing design difficulty and production costs.

According to a third aspect, an embodiment of this application further provides an electronic device, where the electronic device includes a circuit board and a voltage conversion circuit, and the voltage conversion circuit is disposed on the circuit board. The voltage conversion circuit is the voltage conversion circuit according to the second aspect or the implementations of the second aspect. Because the voltage conversion circuit has good performance, performance of the electronic device including the voltage conversion circuit is also good.

In addition, for a technical effect of a corresponding solution in the third aspect, refer to a technical effect that can be achieved in a corresponding solution in the first aspect or the second aspect. Repeated content is not described in detail again.

### BRIEF DESCRIPTION OF DRAWINGS

FIG. 1 is a diagram of a structure of an electronic device according to an embodiment of this application;
FIG. 2 is an equivalent circuit block diagram of a voltage conversion circuit according to an embodiment of this application;
FIG. 3a is an equivalent circuit block diagram of a switched-capacitor assembly according to an embodiment of this application;
FIG. 3b is an equivalent circuit block diagram of a switched-capacitor module according to an embodiment of this application;
FIG. 4a is a schematic of a circuit topology of a resonant switched-capacitor circuit according to an embodiment of this application;
FIG. 4b is a schematic of another circuit topology of a resonant switched-capacitor circuit according to an embodiment of this application;
FIG. 4c is a schematic of a circuit topology of a non-resonant switched-capacitor circuit according to an embodiment of this application;
FIG. 5 is a signal timing diagram of a switched-capacitor circuit according to an embodiment of this application;
FIG. 6A to FIG. 6C are an equivalent circuit schematic of a resonant switched-capacitor circuit according to an embodiment of this application;
FIG. 7A to FIG. 7C are an equivalent circuit schematic of a non-resonant switched-capacitor circuit according to an embodiment of this application;
FIG. 8 is a relationship diagram of current change time according to an embodiment of this application;
FIG. 9a is a signal timing diagram of a switched-capacitor module according to an embodiment of this application;
FIG. 9b is another signal timing diagram of a switched-capacitor module according to an embodiment of this application;
FIG. 9c is another signal timing diagram of a switched-capacitor module according to an embodiment of this application;
FIG. 10a to FIG. 10j are respectively circuit schematics of a control manner according to an embodiment of this application;
FIG. 11a is a diagram of a simulation result of efficiency of an entire voltage conversion circuit according to an embodiment of this application;
FIG. 11b is a diagram of a simulation result of efficiency of a switched-capacitor assembly according to an embodiment of this application;
FIG. 11c is a diagram of a simulation result of efficiency of a DC-DC conversion circuit according to an embodiment of this application;
FIG. 12a is a diagram of another simulation result of efficiency of an entire voltage conversion circuit according to an embodiment of this application;
FIG. 12b is a diagram of another simulation result of efficiency of a DC-DC conversion circuit according to an embodiment of this application;
FIG. 13a to FIG. 13g are block diagrams of structures of a voltage conversion circuit and a first chip according to an embodiment of this application;
FIG. 14a is a diagram of a structure of a voltage conversion circuit and a first chip according to an embodiment of this application;
FIG. 14b is an equivalent circuit schematic of the voltage conversion circuit and the first chip shown in FIG. 14a;
FIG. 15a is a diagram of another structure of a voltage conversion circuit and a first chip according to an embodiment of this application;
FIG. 15b is an equivalent circuit schematic of the voltage conversion circuit and the first chip shown in FIG. 15a;
FIG. 16a is a diagram of another structure of a voltage conversion circuit and a first chip according to an embodiment of this application;
FIG. 16b is an equivalent circuit schematic of the voltage conversion circuit and the first chip shown in FIG. 16a; and
FIG. 17 to FIG. 23 are diagrams of another structure of a voltage conversion circuit and a first chip according to an embodiment of this application.

Reference numerals:
100: housing; 210: circuit board; 220: load; 230: voltage conversion circuit; 211: first chip; 212: second chip; 221: first substrate; 222: second substrate; 231: DC-DC conversion circuit; 232: switched-capacitor assembly; 2321_1 to 2321_Q: switched-capacitor modules; 23211_1 to 23211_N: switched-capacitor circuits; 233: direct current converter; 241/242: first conductive part; 251/252: second conductive part; 261/262/263/264: signal line; 311/312: resonant switched-capacitor circuit; 313: non-resonant switched-capacitor circuit; C1: power output capacitor; C2: power input capacitor; C3: input filter capacitor; C4: output filter capacitor; Uin/Umid/Uout: voltage; K1: first through hole; and K2: second through hole.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. It should be noted that in the descriptions of this application, "a plurality of" is understood as "at least two". In addition, it should be understood that in description of this application, terms such as "first" and "second" are merely used for distinguishing and description, but should not be understood as indicating or implying relative importance, or should not be understood as indicating or implying a sequence.

It should be noted that same reference numerals in the accompanying drawings of this application indicate same or similar structures. Therefore, repeated descriptions thereof are omitted. Expressions of positions and directions in this application are described by using the accompanying drawings as an example. However, changes may also be made as required, and all the changes fall within the protection scope of this application. The accompanying drawings in this application are merely used to illustrate relative positional relationships and do not represent an actual scale.

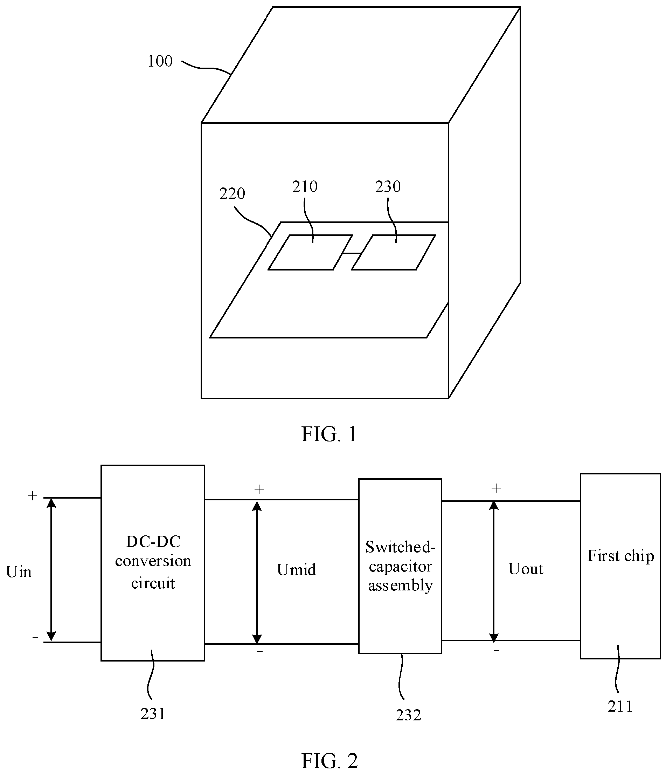

FIG. 1 is a diagram of a structure of an electronic device according to an embodiment of this application. Refer to FIG. 1. In this embodiment of this application, the electronic device includes a housing 100 and a circuit board 210 disposed in the housing 100. A voltage conversion circuit 230 and a load 220 are disposed on the circuit board 210. The voltage conversion circuit 230 is configured to supply power to the load 220. In addition, the electronic device further includes a power module disposed in the housing 100. The power module is connected to the voltage conversion circuit 230. The power module may convert electric energy provided by a power supply and then input converted electric energy to the voltage conversion circuit 230.

For example, the electronic device may be a computer device having a processor chip, for example, a server, a desktop computer, or a personal computer, or may be a portable electronic device having a processor chip, for example, a mobile phone, a tablet computer, or a vehicle-mounted device. The load 220 includes, for example, but is not limited to, a chip. For example, the chip may be a chip having a logical operation capability, for example, a graphics processing unit (graphics processing unit, GPU), a central processing unit (central processing unit, CPU), an artificial intelligence (artificial intelligence, AI) chip, or a system on chip (system on chip, SoC), or may be another type of programmable logic device, for example, an application-specific integrated circuit (application-specific integrated circuit, ASIC), a field programmable gate array (field programmable gate array, FPGA), a transistor logic device, a hardware component, or any combination thereof. In addition, the circuit board includes, for example, but is not limited to, a printed circuit board (Printed Circuit Board, PCB). In this embodiment of this application, an example in which the load is a chip is used for description.

A GPU is used as an example. An existing GPU has a plurality of transistors. While performance is improved, power supply requirements increase exponentially. Power supplying has become a limiting factor in improving computing performance of the GPU. Because a computational capability of the chip is improved and a size of the chip is increased, a current required by the chip increases. In addition, it is difficult to reduce a pulse current in a power supply link of a power delivery network (power delivery network, PDN) that supplies power to the CPU, and therefore, a transient voltage fluctuation occurs on a power supply pin of the chip. These voltage fluctuations cause problems such as performance and power consumption of the CPU.

Therefore, an embodiment of this application provides a voltage conversion circuit that can be used in the foregoing electronic device. The voltage conversion circuit includes a DC-DC conversion circuit and a switched-capacitor assembly. The DC-DC conversion circuit and the switched-capacitor assembly output a high current to a chip, and reduce a pulsating current, thereby improving current stability, reducing voltage fluctuation, and improving performance of the chip.

The following specifically describes an operating process of the voltage conversion circuit provided in embodiments of this application with reference to an equivalent circuit block diagram.

FIG. 2 is an equivalent circuit block diagram of the voltage conversion circuit according to an embodiment of this application. Refer to FIG. 2. An input end of a direct current-direct current (Direct Current-Direct Current, DC-DC) conversion circuit 231 may receive an input voltage Uin, an output end of the DC-DC conversion circuit 231 is connected to an input end of a switched-capacitor assembly 232, and an output end of the switched-capacitor assembly 232 is connected to a first chip 211 (namely, a load). During specific implementation, the input end of the DC-DC conversion circuit 231 may be connected to the power module of the electronic device, and a transformation ratio of the DC-DC conversion circuit 231 may have different implementation forms based on different power voltages output by the power module. For example, if the input voltage Uin output by the power module is 48 V, the DC-DC conversion circuit 231 may have a transformation ratio of 48 to n. For example, if the DC-DC conversion circuit 231 has a transformation ratio of 48 to 1.8, the DC-DC conversion circuit 231 may perform buck conversion on the voltage Uin of 48 V to obtain a voltage Umid of 1.8 V for output. In addition, the switched-capacitor assembly 232 alternatively has a transformation ratio of n to 1. In this case, the switched-capacitor assembly 232 may perform buck conversion on a voltage Umid based on the transformation ratio, output a voltage Uout, and output the voltage Uout to the first chip 211 (namely, the load). For example, the voltage Umid is 1.8 V. If the transformation ratio of the switched-capacitor assembly 232 is 2 to 1, the voltage Uout is 0.9 V. In addition, if a current input by the switched-capacitor assembly 232 is Imid, a current output by the switched-capacitor assembly 232 is 2Imid. In this way, in the voltage conversion circuit in this embodiment of this application, the DC-DC conversion circuit 231 and the switched-capacitor assembly 232 are disposed, so that the voltage conversion circuit may be formed in a form of two-level architecture. In addition, the voltage conversion circuit in this embodiment of this application may be used in a buck scenario to supply power to the first chip 211.

For example, the DC-DC conversion circuit may be, for example, disposed as an LLC resonant converter (Resonant LLC Converter) or a current doubler rectifier (Current Doubler Rectifier, CDR) converter. During an actual application, because a circuit topology of the LLC resonant converter or the current doubler rectifier is mature, the DC-DC conversion circuit in this application is disposed as the LLC resonant converter or the current doubler rectifier, thereby being simple to implement, and reducing design difficulty and production costs. It should be noted that the LLC resonant converter and the CDR are merely feasible examples for implementing the DC-DC conversion circuit. During an actual application, a circuit topology of the DC-DC conversion circuit may alternatively be in another form. This is not specifically limited herein.

The following describes in detail a structure and an operating process of the switched-capacitor assembly.

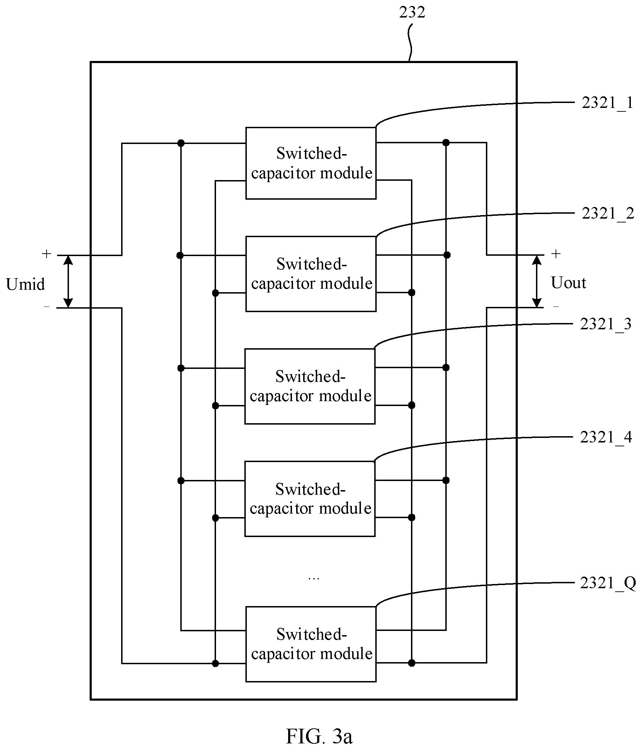

FIG. 3a is an equivalent circuit block diagram of the switched-capacitor assembly according to an embodiment of this application. Refer to FIG. 3a. The switched-capacitor assembly 232 may include Q switched-capacitor modules 2321_1 to 2321_Q. Input ends of the Q switched-capacitor modules 2321_1 to 2321_Q are connected in parallel to each other to serve as an input end of the switched-capacitor assembly 232. Output end signals of the Q switched-capacitor modules 2321_1 to 2321_Q are connected in parallel to each other to serve as an output end of the switched-capacitor assembly 232. Specifically, positive input ends in the input ends of the switched-capacitor modules 2321_1 to 2321_Q are connected to each other to serve as a positive input end in the input ends of the switched-capacitor assembly 232, and negative input ends in the input ends of the switched-capacitor modules 2321_1 to 2321_Q are connected to each other to serve as a negative input end in the input ends of the switched-capacitor assembly 232. In addition, positive output ends in the output ends of the switched-capacitor modules 2321_1 to 2321_Q are connected to each other to serve as a positive output end in output ends of the switched-capacitor assembly 232, and negative output ends in the output ends of the switched-capacitor modules 2321_1 to 2321_Q are connected to each other to serve as a negative output end in the output ends of the switched-capacitor assembly 232. In this way, each switched-capacitor module can receive a voltage Umid, and each switched-capacitor module can buck the voltage Umid to Uout and then output the voltage. It may be understood that there are Q switched-capacitor modules, where Q is an integer and Q≥1. For example, Q may be 1, 2, 3, 4, or more. During specific implementation, a specific value of Q may be determined based on an actual application scenario. This is not limited herein. FIG. 3a is described by using an example in which Q is an integer greater than 1.

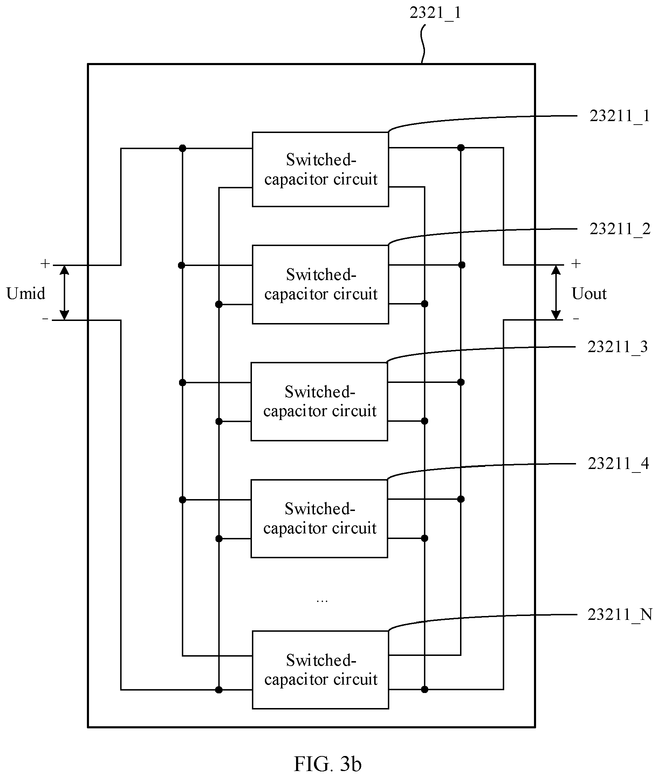

FIG. 3b is an equivalent circuit block diagram of the switched-capacitor module according to an embodiment of this application. Refer to FIG. 3b. The switched-capacitor module 2321_1 may include N switched-capacitor circuits 23211_1 to 23211_N, where input ends of the N switched-capacitor circuits 23211_1 to 23211_N are connected to an input end of the switched-capacitor module 2321_1, and output ends of the N switched-capacitor circuits 23211_1 to 23211_N are connected to an output end of the switched-capacitor module 2321_1. Specifically, positive input ends in the input ends of the switched-capacitor circuits 23211_1 to 23211_N are connected to a positive input end in the input ends of the switched-capacitor module 2321_1, and negative input ends in the input ends of the switched-capacitor circuits 23211_1 to 23211_N are connected to a negative input end in the input ends of the switched-capacitor module 2321_1. In addition, positive output ends in the output ends of the switched-capacitor circuits 23211_1 to 23211_N are connected to a positive output end in the output ends of the switched-capacitor module 2321_1, and negative output ends in the output ends of the switched-capacitor circuits 23211_1 to 23211_N are connected to a negative output end in the output ends of the switched-capacitor module 2321_1. It may be understood that, there are N switched-capacitor circuits 23211, where N is an integer and N≥1. For example, N may be 1, 2, 3, 4, or more. During specific implementation, a specific value of N may be determined based on an actual application scenario. This is not limited herein. FIG. 3b is described by using an example in which N is an integer greater than 1. In addition, for an implementation of the switched-capacitor modules 2321_2 to 2321_Q, refer to the implementation of the switched-capacitor module 2321_1. Details are not described herein again.

In specific implementation, a capacitor and a switching transistor are disposed in the switched-capacitor circuit. The switching transistor may be controlled to be turned on or off by using a switching signal, to implement a charging and discharging process of the capacitor. In this way, a voltage conversion function may be implemented by using the on/off of the switching transistor and charging and discharging characteristics of the capacitor, so that the switched-capacitor circuit has advantages such as a simple structure, flexible control, and a fast response speed. The switched-capacitor circuit has a large quantity of circuit topologies, for example, has a resonant switched-capacitor circuit and a non-resonant switched-capacitor circuit. The switched-capacitor circuit in embodiments of this application may be a resonant switched-capacitor circuit or a non-resonant switched-capacitor circuit. In some examples, when the switched-capacitor circuit is disposed as a resonant switched-capacitor circuit, a loss may be reduced in a buck conversion process, and an output voltage may be fine-tuned. The following describes a structure of the switched-capacitor module by using an example in which the transformation ratio is 2 to 1 for the switched-capacitor circuit.

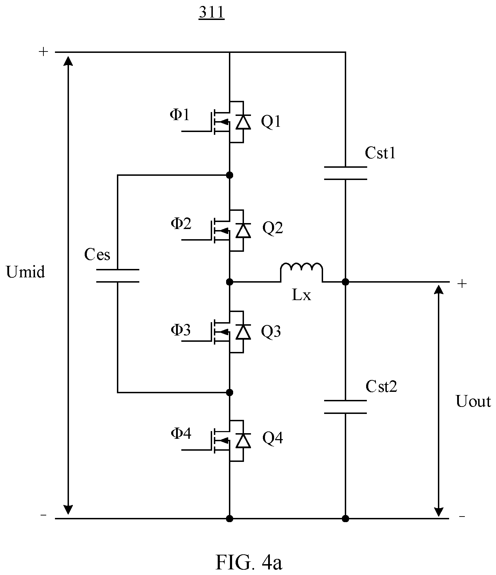

FIG. 4a is a schematic of a circuit topology of a resonant switched-capacitor circuit according to an embodiment of this application. For example, as shown in FIG. 4a, the switched-capacitor circuit may be disposed as a resonant switched-capacitor circuit 311. The resonant switched-capacitor circuit 311 may include a first switching transistor Q1, a second switching transistor Q2, a third switching transistor Q3, a fourth switching transistor Q4, an energy storage capacitor Ces, a first filter capacitor Cst1, a second filter capacitor Cst2, and an inductor Lx. A control electrode of the first switching transistor Q1 is configured to receive a first switching signal Φ1, a first electrode of the first switching transistor Q1 is connected to a positive input end in input ends of the resonant switched-capacitor circuit 311 and a first electrode of the first filter capacitor Cst1, and a second electrode of the first switching transistor Q1 is connected to a first electrode of the second switching transistor Q2 and a first electrode of the energy storage capacitor Ces. A control electrode of the second switching transistor Q2 is configured to receive a second switching signal Φ2, and a second electrode of the second switching transistor Q2 is connected to a first electrode of the third switching transistor Q3 and a first end of the inductor Lx. A control electrode of the third switching transistor Q3 is configured to receive a third switching signal Φ3, and a second electrode of the third switching transistor Q3 is connected to a first electrode of the fourth switching transistor Q4 and a second electrode of the energy storage capacitor Ces. A control electrode of the fourth switching transistor Q4 is configured to receive a fourth switching signal Φ4, and a second electrode of the fourth switching transistor Q4 is connected to a second electrode of the second filter capacitor Cst2, a negative input end in the input ends of the resonant switched-capacitor circuit 311, and a negative output end in output ends of the resonant switched-capacitor circuit 311. A second electrode of the first filter capacitor Cst1 is connected to a first electrode of the second filter capacitor Cst2, a second end of the inductor Lx, and a positive output end in the output ends of the resonant switched-capacitor circuit 311. In this way, the switched-capacitor circuit in this embodiment of this application may be implemented by using a resonant switched-capacitor circuit 311 with a simple structure. In addition, during an actual application, a circuit structure of the resonant switched-capacitor circuit 311 is mature. The switched-capacitor circuit in this application is disposed as the resonant switched-capacitor circuit 311, thereby reducing a loss, fine-tuning an output voltage, being simple to implement, and reducing design difficulty and production costs.

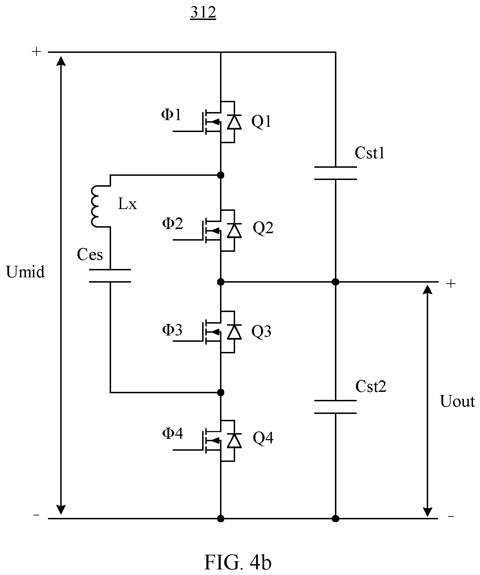

FIG. 4b is a schematic of another circuit topology of a resonant switched-capacitor circuit according to an embodiment of this application. For example, as shown in FIG. 4b, the switched-capacitor circuit may be disposed as a resonant switched-capacitor circuit 312. The resonant switched-capacitor circuit 312 may include a first switching transistor Q1, a second switching transistor Q2, a third switching transistor Q3, a fourth switching transistor Q4, an energy storage capacitor Ces, a first filter capacitor Cst1, a second filter capacitor Cst2, and an inductor Lx. A control electrode of the first switching transistor Q1 is configured to receive a first switching signal Φ1, a first electrode of the first switching transistor Q1 is connected to a positive input end in input ends of the resonant switched-capacitor circuit 312 and a first electrode of the first filter capacitor Cst1, and a second electrode of the first switching transistor Q1 is connected to a first electrode of the second switching transistor Q2 and a first end of the inductor Lx. A second end of the inductor Lx is connected to a first electrode of the energy storage capacitor Ces. A control electrode of the second switching transistor Q2 is configured to receive a second switching signal Φ2, and a second electrode of the second switching transistor Q2 is connected to a first electrode of the third switching transistor Q3, a second electrode of the first filter capacitor Cst1, a first electrode of the second filter capacitor Cst2, and a positive output end in output ends of the resonant switched-capacitor circuit 312. A control electrode of the third switching transistor Q3 is configured to receive a third switching signal Φ3, and a second electrode of the third switching transistor Q3 is connected to a first electrode of the fourth switching transistor Q4 and a second electrode of the energy storage capacitor Ces. A control electrode of the fourth switching transistor Q4 is configured to receive a fourth switching signal Φ4, and a second electrode of the fourth switching transistor Q4 is connected to a second electrode of the second filter capacitor Cst2, a negative input end in the input ends of the resonant switched-capacitor circuit 312, and a negative output end in output ends of the resonant switched-capacitor circuit 312. In this way, the switched-capacitor circuit in this embodiment of this application may be implemented by using a resonant switched-capacitor circuit 312 with a simple structure. In addition, during an actual application, a circuit structure of the resonant switched-capacitor circuit 312 is mature. The switched-capacitor circuit in this application is disposed as the resonant switched-capacitor circuit 312, thereby reducing a loss, fine-tuning an output voltage, being simple to implement, and reducing design difficulty and production costs.

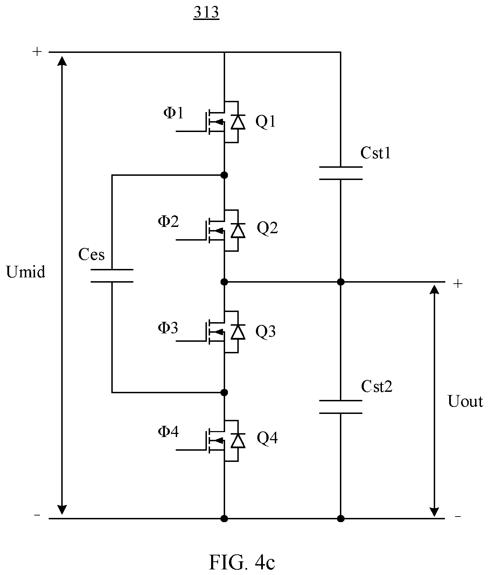

FIG. 4c is a schematic of a circuit topology of a non-resonant switched-capacitor circuit according to an embodiment of this application. For example, as shown in FIG. 4c, the switched-capacitor circuit may be disposed as a non-resonant switched-capacitor circuit 313. The non-resonant switched-capacitor circuit 313 may include a first switching transistor Q1, a second switching transistor Q2, a third switching transistor Q3, a fourth switching transistor Q4, an energy storage capacitor Ces, a first filter capacitor Cst1, and a second filter capacitor Cst2. A control electrode of the first switching transistor Q1 is configured to receive a first switching signal Φ1, a first electrode of the first switching transistor Q1 is connected to a positive input end in input ends of the non-resonant switched-capacitor circuit 313 and a first electrode of the first filter capacitor Cst1, and a second electrode of the first switching transistor Q1 is connected to a first electrode of the second switching transistor Q2 and a first electrode of the energy storage capacitor Ces. A control electrode of the second switching transistor Q2 is configured to receive a second switching signal Φ2, and a second electrode of the second switching transistor Q2 is connected to a first electrode of the third switching transistor Q3, a second electrode of the first filter capacitor Cst1, a first electrode of the second filter capacitor Cst2, and a positive output end in output ends of the non-resonant switched-capacitor circuit 313. A control electrode of the third switching transistor Q3 is configured to receive a third switching signal Φ3, and a second electrode of the third switching transistor Q3 is connected to a first electrode of the fourth switching transistor Q4 and a second electrode of the energy storage capacitor Ces. A control electrode of the fourth switching transistor Q4 is configured to receive a fourth switching signal Φ4, and a second electrode of the fourth switching transistor Q4 is connected to a second electrode of the second filter capacitor Cst2, a negative input end in the input ends of the non-resonant switched-capacitor circuit 313, and a negative output end in output ends of the non-resonant switched-capacitor circuit 313. In this way, the switched-capacitor circuit in this embodiment of this application may be implemented by using a non-resonant switched-capacitor circuit 313 with a simple structure. In addition, during an actual application, a circuit structure of the non-resonant switched-capacitor circuit 313 is mature. The switched-capacitor circuit in this application is disposed as the non-resonant switched-capacitor circuit 313, thereby being simple to implement, and reducing design difficulty and production costs.

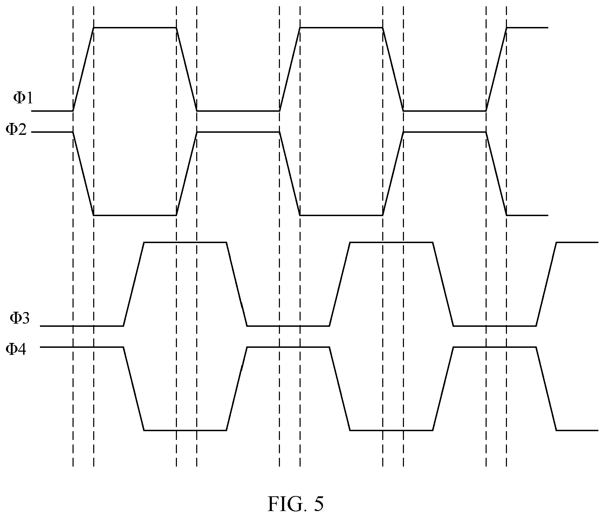

FIG. 5 is a signal timing diagram of the switched-capacitor circuit according to an embodiment of this application. Refer to FIG. 5. The first switching signal Φ1, the second switching signal Φ2, the third switching signal Φ3, and the fourth switching signal Φ4 may be pulse width modulation (Pulse Width Modulation, PWM) signals. The resonant switched-capacitor circuit 311 shown in FIG. 4a is used as an example. The first switching signal Φ1 controls on and off of the first switching transistor Q1, the second switching signal Φ2 controls on and off of the second switching transistor Q2, the third switching signal Φ3 controls on and off of the third switching transistor Q3, and the fourth switching signal Φ4 controls on and off of the fourth switching transistor Q4. The switching frequency may be a frequency of the first switching signal Φ1, the second switching signal Φ2, the third switching signal Φ3, and the fourth switching signal Φ4, and the first switching signal Φ1, the second switching signal Φ2, the third switching signal Φ3, and the fourth switching signal Φ4 have a same frequency. During operation, if the first switching transistor Q1, the second switching transistor Q2, the third switching transistor Q3, and the fourth switching transistor Q4 are turned on under control of a high-level signal and turned off under control of a low-level signal, the first switching transistor Q1 and the third switching transistor Q3 may be controlled to be turned on in an interleaved manner, and the second switching transistor Q2 and the fourth switching transistor Q4 may be controlled to be turned on in an interleaved manner. In addition, the first switching transistor Q1 and the second switching transistor Q2 are turned on in a phase-inverted manner, and the third switching transistor Q3 and the fourth switching transistor Q4 are turned on in a phase-inverted manner, so that a voltage Umid is bucked to a voltage Uout for output. In addition, for the resonant switched-capacitor circuit 311, operating modes of the first switching transistor Q1 to the third switching transistor Q4 may be further adjusted by adjusting one or more of duty cycles, switching frequencies, and phases of the signals Φ1 to Φ4, so as to adjust the output voltage Uout. In addition, for operating processes of the resonant switched-capacitor circuit 312 and the non-resonant switched-capacitor circuit 313, refer to the operating process of the resonant switched-capacitor circuit 311. Details are not described herein again.

Therefore, in this embodiment of this application, the operating process of the switched-capacitor circuit may be controlled by controlling one or more of a switching frequency and a phase of a switching signal. In addition, in this application, switching frequencies corresponding to switched-capacitor circuits in a same switched-capacitor module may be the same, so that the switched-capacitor circuits in the same switched-capacitor module can be uniformly controlled, to avoid voltage fluctuation.

In addition, because the switched-capacitor assembly is used in a low-voltage and high-current application scenario, during actual operation, when the load changes slightly (for example, no short circuit occurs on the load), an input current of the load is stable, so that an input voltage (which may be considered as the voltage Uout) of the load is also usually stable. However, when the load changes greatly (for example, a short circuit occurs on the load), an input current of the load changes accordingly (for example, increases), and consequently, an input voltage (which may be considered as the voltage Uout) of the load fluctuates. Especially, when the input current of the load changes greatly, the input voltage of the first chip may drop or overshoot greatly. However, current change time Δt of the input current of the first chip 211 (namely, the load) is usually very fast. To resolve a problem of voltage drop or overshoot of the first chip, when the Q switched-capacitor modules are controlled, a capability on an input side needs to be transferred to an output side as quickly as possible. In addition, as a higher switching frequency indicates faster energy transfer, there is a specific relationship between the switching frequency and the current change time Δt.

In some embodiments, interleaved control may be performed on the Q switched-capacitor modules, so that the Q switched-capacitor modules implement interleaved parallel operation. In addition, when the interleaved control is performed on the Q switched-capacitor modules, a reciprocal (namely, 1/Δt) of current change time of the first chip 211 (namely, the load) may be limited to be less than Q*N*Fsw, so that an equivalent output impedance can be reduced. In this way, each switched-capacitor circuit can complete switching of at least one switching cycle within time Δt, thereby providing a dynamic load current from the input to the output in real time, reducing delay time of a loop response, and improving dynamic performance of the chip. Fsw represents a switching frequency of the switched-capacitor circuit, and Δt represents current change time.

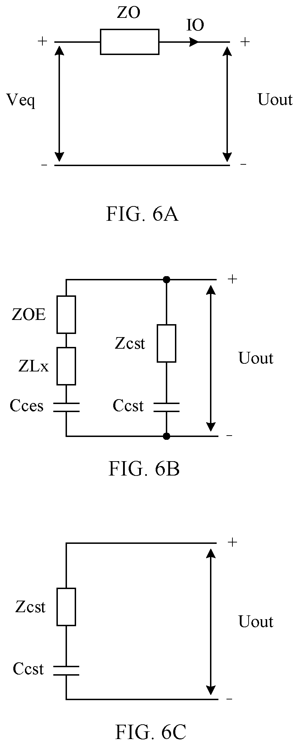

For example, the resonant switched-capacitor circuit 312 shown in FIG. 4b is used as an example. With reference to the equivalent circuit schematic shown in FIG. 6A to FIG. 6C, FIG. 6A shows an equivalent circuit when the first switching transistor Q1 and the third switching transistor Q3 are both turned on. ZO is a total equivalent resistance of the resonant switched-capacitor circuit 312 during operation. IO is a current at an output end of the resonant switched-capacitor circuit 312, where Veq=Umid/2, Uout=Veq-IO*R_{ZO}, and R_{ZO} represents a resistance value of the total equivalent resistance ZO.

FIG. 6B shows an equivalent circuit of the resonant switched-capacitor circuit 312 during operation when the reciprocal (namely, 1/Δt) of the current change time of the first chip 211 (namely, the load) is limited to be less than Q*N*Fsw. An equivalent resistance ZOE represents a sum of an equivalent resistance of the first switching transistor Q1, an equivalent resistance of the third switching transistor Q3, and an equivalent series resistance of the energy storage capacitor Ces, ZLx represents an equivalent series resistance of the inductor Lx, Cces represents an equivalent capacitance of the energy storage capacitor Ces, Ccst represents a total equivalent capacitance when the first filter capacitor Cst1 and the second filter capacitor Cst2 are connected in parallel, and Zcst represents an equivalent series resistance of the total equivalent capacitance Ccst.

For example, resistance values Rₒₙ of equivalent resistances of the first switching transistor Q1 to the fourth switching transistor Q4 are the same. R_{ZOE}=2Rₒₙ+R_{ces}, where R_{ZOE} represents a resistance value of the equivalent resistance ZOE, and R_{ces} represents a resistance value of the equivalent series resistance of the energy storage capacitor Ces.

RZ_{cst}=(R_{cst1}*R_{cst2})/(R_{cst1}+R_{cst2}), where R_{Zcst} represents a resistance value of the equivalent series resistance Zcst, R_{cst1} represents a resistance value of the equivalent series resistance of the first filter capacitor Cst1, and R_{cst2} represents a resistance value of the equivalent series resistance of the second filter capacitor Cst2.

C_{ccst}=C_{cst1}+C_{cst2}, where C_{ccst} represents a capacitance value of the total equivalent capacitance Ccst, C_{cst1} represents a capacitance value of the first filter capacitor Cst1, and C_{cst2} represents a capacitance value of the second filter capacitor Cst2.

In addition, R_{ZO}=(R_{A}*R_{B})/(R_{A}+R_{B})/(Q*N), R_{A}=R_{Zcst}+1/(s*C_{ccst}), R_{B}=R_{ces}+2Rₒₙ+s*Lₗₓ+1/(s*C_{cces}), where C_{cces} represents a capacitance value of the equivalent capacitance of the energy storage capacitor Ces, s represents a Laplace transform coefficient, and Lₗₓ represents an inductance value of the inductor Lx. In addition, R_{ZO} when the second switching transistor Q2 and the fourth switching transistor Q4 are both turned on may be obtained by analogy, and details are not described herein.

FIG. 6C shows an equivalent circuit of the resonant switched-capacitor circuit 312 during operation when the reciprocal (namely, 1/Δt) of the current change time of the first chip 211 (namely, the load) is limited to be greater than Q*N*Fsw. Ccst represents a total equivalent capacitance when the first filter capacitor Cst1 and the second filter capacitor Cst2 are connected in parallel, and Zcst represents an equivalent series resistance of the total equivalent capacitance Ccst. RZ_{cst}=(R_{cst1}*R_{cst2})/(R_{cst1}+R_{cst2}), and C_{ccst}=C_{cst1}+C_{cst2}. In addition, R_{ZO}=[RZ_{cst}+1/(s*C_{ccst})]/(Q* N), where s represents a Laplace transform coefficient. In addition, when 1/Δt>Q*N*Fsw, each switching transistor in each switched-capacitor circuit may be open-circuited within the time Δt.

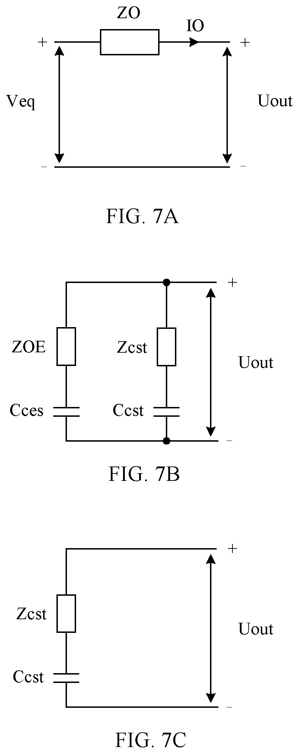

For example, the non-resonant switched-capacitor circuit 313 shown in FIG. 4c is used as an example. With reference to the equivalent circuit schematic shown in FIG. 7A to FIG. 7C, FIG. 7A shows an equivalent circuit of the non-resonant switched-capacitor circuit 313 during operation. ZO is a total equivalent resistance of the non-resonant switched-capacitor circuit 313 during operation. IO is a current at an output end of the non-resonant switched-capacitor circuit 313. Veq=Umid/2, Uout=Veq-IO*R_{ZO}, and R_{ZO} represents a resistance value of the total equivalent resistance ZO.

FIG. 7B shows an equivalent circuit of the non-resonant switched-capacitor circuit 313 during operation (using an example in which the first switching transistor Q1 and the third switching transistor Q3 are both turned on) when the reciprocal (namely, 1/Δt) of the current change time of the first chip 211 (namely, the load) is limited to be less than Q*N*Fsw. An equivalent resistance ZOE represents a sum of an equivalent resistance of the first switching transistor Q1, an equivalent resistance of the third switching transistor Q3, and an equivalent series resistance of the energy storage capacitor Ces, Cces represents an equivalent capacitance of the energy storage capacitor Ces, Ccst represents a total equivalent capacitance when the first filter capacitor Cst1 and the second filter capacitor Cst2 are connected in parallel, and Zcst represents an equivalent series resistance of the total equivalent capacitance Ccst.

For example, resistance values Rₒₙ of equivalent resistances of the first switching transistor Q1 to the fourth switching transistor Q4 are the same. R_{ZOE}=2Rₒₙ+R_{ces}, where R_{ZOE} represents a resistance value of the equivalent resistance ZOE, and R_{ces} represents a resistance value of the equivalent series resistance of the energy storage capacitor Ces.

RZ_{cst}=(R_{cst1}*R_{cst2})/(R_{cst1}+R_{cst2}), where R_{Zcst} represents a resistance value of the equivalent series resistance Zcst, R_{cst1} represents a resistance value of the equivalent series resistance of the first filter capacitor Cst1, and R_{cst2} represents a resistance value of the equivalent series resistance of the second filter capacitor Cst2.

C_{ccst}=C_{cst1}+C_{cst2}, where C_{ccst} represents a capacitance value of the total equivalent capacitance Ccst, C_{cst1} represents a capacitance value of the first filter capacitor Cst1, and C_{cst2} represents a capacitance value of the second filter capacitor Cst2.

In addition, R_{ZO}=(R_{A}*R_{B})/(R_{A}+R_{B})/(Q*N), R_{A}=R_{Zcst}+1/(s*C_{ccst}), R_{B}=R_{ces}+2Rₒₙ+1/(s*C_{cces}), where C_{cces} represents a capacitance value of the equivalent capacitance of the energy storage capacitor Ces, and s represents a Laplace transform coefficient. In addition, R_{ZO} when the second switching transistor Q2 and the fourth switching transistor Q4 are both turned on may be obtained by analogy, and details are not described herein.

FIG. 7C shows an equivalent circuit of the non-resonant switched-capacitor circuit 313 during operation when the reciprocal (namely, 1/Δt) of the current change time of the first chip 211 (namely, the load) is limited to be greater than Q*N*Fsw. Ccst represents a total equivalent capacitance when the first filter capacitor Cst1 and the second filter capacitor Cst2 are connected in parallel, and Zcst represents an equivalent series resistance of the total equivalent capacitance Ccst. RZ_{cst}=(R_{cst1}*R_{cst2})/(R_{cst1}+R_{cst2}), and C_{ccst}=C_{cst1}+C_{cst2}. In addition, R_{ZO}=[RZ_{cst}+1/(s*C_{ccst})]/(Q*N), where s represents a Laplace transform coefficient. In addition, when 1/Δt>Q*N*Fsw, each switching transistor in each switched-capacitor circuit may be open-circuited within the time Δt.

In conclusion, with reference to FIG. 6A to FIG. 6C and FIG. 7A to FIG. 7C, regardless of whether the switched-capacitor circuit in this application is disposed as a resonant switched-capacitor circuit or a non-resonant switched-capacitor circuit, when the Q switched-capacitor modules are connected in parallel and interleaved control is performed on the Q switched-capacitor modules, the reciprocal (namely, 1/Δt) of the current change time of the first chip 211 (namely, the load) may be limited to be less than Q*N*Fsw, so that the equivalent output impedance of each switched-capacitor circuit can be reduced. In this way, each switched-capacitor circuit can complete switching of at least one switching cycle within the time Δt, and the Q switched-capacitor modules can quickly provide a dynamic load current from the input to the output in real time.

In some other embodiments, non-interleaved control may alternatively be performed on the Q switched-capacitor modules, so that the Q switched-capacitor modules can implement non-interleaved parallel operation. In addition, when the non-interleaved control is performed on the Q switched-capacitor modules, a reciprocal (namely, 1/Δt) of current change time of the first chip 211 (namely, the load) may be limited to be less than N*Fsw, so that an equivalent output impedance can be reduced. In this way, each switched-capacitor circuit can complete switching of at least one switching cycle within time Δt, thereby providing a dynamic load current from the input to the output in real time, reducing delay time of a loop response, and improving dynamic performance of the chip. Fsw represents a switching frequency of the switched-capacitor circuit, and Δt represents current change time.

In addition, when non-interleaved control is performed on the Q switched-capacitor modules, and the switched-capacitor circuit in this embodiment of this application is disposed as a resonant switched-capacitor circuit (for example, 312), an equivalent circuit of the switched-capacitor circuit may alternatively be shown in FIG. 6A to FIG. 6C. When the reciprocal (namely, 1/Δt) of the current change time of the first chip 211 (namely, the load) is limited to be less than N*Fsw, R_{ZO}=(R_{A}*R_{B})/(R_{A}+R_{B})/N, R_{A}=RZ_{cst}+1/(s*C_{ccst}), and R_{B}=R_{ces}+2Rₒₙ+s*Lₗₓ+1/(s*C_{cces}). When the reciprocal (namely, 1/Δt) of the current change time of the first chip 211 (namely, the load) is limited to be greater than N*Fsw, R_{ZO}=[R_{Zcst}+1/(s*C_{ccst})]/N.

In addition, when the non-interleaved control is performed on the Q switched-capacitor module, and the switched-capacitor circuit in this embodiment of this application is disposed as a non-resonant switched-capacitor circuit (for example, 313), an equivalent circuit of the switched-capacitor circuit may alternatively be shown in FIG. 7A to FIG. 7C. When the reciprocal (namely, 1/Δt) of the current change time of the first chip 211 (namely, the load) is limited to be less than N*Fsw, R_{ZO}=(R_{A}*R_{B})/(R_{A}+R_{B})/N, R_{A}=R_{Zcst}+1/(s*C_{ccst}), and R_{B}=R_{ces}+2Rₒₙ+1/(s*C_{cces}). When the reciprocal (namely, 1/Δt) of the current change time of the first chip 211 (namely, the load) is limited to be greater than N*Fsw, R_{ZO}=[R_{Zcst}+1/(s*C_{ccst})]/N.

In conclusion, regardless of whether the switched-capacitor circuit in this application is disposed as a resonant switched-capacitor circuit or a non-resonant switched-capacitor circuit, when the Q switched-capacitor modules are connected in parallel and non-interleaved control is performed on the Q switched-capacitor modules, the reciprocal (namely, 1/Δt) of the current change time of the first chip 211 (namely, the load) may be limited to be less than Q*N*Fsw, so that the equivalent output impedance of each switched-capacitor circuit can be reduced. In this way, each switched-capacitor circuit can complete switching of at least one switching cycle within the time Δt, and the Q switched-capacitor modules can quickly provide a dynamic load current from the input to the output in real time.

In addition, when the interleaved control is performed on the Q switched-capacitor modules, the reciprocal (namely, 1/Δt) of the current change time of the first chip 211 (namely, the load) may be limited to be less than Q*N*Fsw. In addition, when non-interleaved control is performed on the Q switched-capacitor modules, the reciprocal (namely, 1/Δt) of the current change time of the first chip 211 (namely, the load) may be limited to be less than N*Fsw. In this way, a switching frequency of the switched-capacitor circuit can be obtained, and the switched-capacitor circuit is controlled to operate based on the switching frequency, so that the switched-capacitor assembly can respond to voltage conversion in a timely manner, thereby enhancing dynamic performance and a response rate. In addition, controlling the switched-capacitor circuit to operate based on the switching frequency can not only enhance dynamic performance and a response rate, but also reduce output capacitance in the switched-capacitor circuit, thereby reducing costs, a board area, and a product volume.

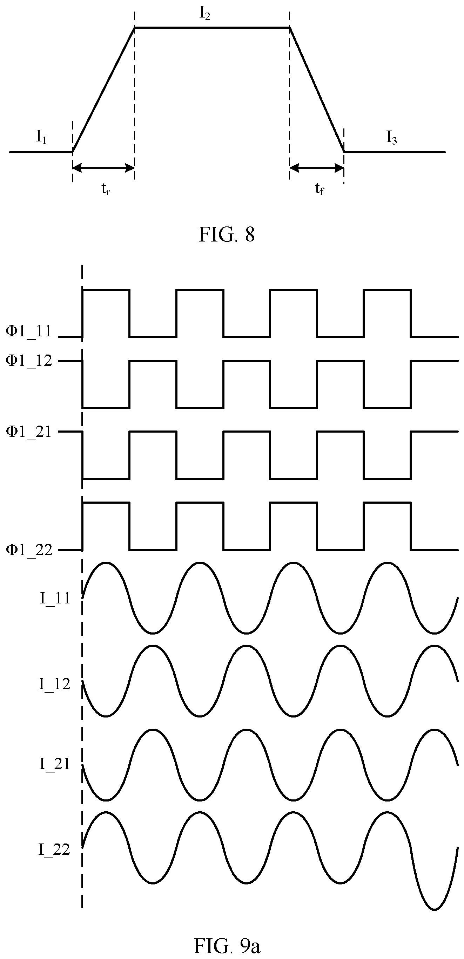

For example, the current change time Δt may be time between two adjacent stable states of the input current of the load. For example, the current change time Δt may be current rise time tᵣ or current fall time t_{f}. The following describes the current change time Δt with reference to FIG. 8. As shown in FIG. 8, I₁, I₂, and I₃ respectively represent input currents of the load in a stable state. During an actual application, because the load changes, the input current of the load increases from I₁ to I₂. Therefore, time within which the current increases from I₁ to I₂ is the current rise time tᵣ. However, during an actual application, because the load changes, the input current of the load may further decrease from I₂ to I₃. Therefore, time within which the current decreases from I₂ to I₃ is the current fall time t_{f}. In addition, it may be understood that, during an actual application, a change condition of an input current of the load may be detected by using a current detection apparatus or a current detection method in the conventional technology, so that the current change time Δt is obtained by using the detected change condition of the input current of the load.

It should be noted that, in this embodiment of this application, the switched-capacitor module is integrated with a plurality of switched-capacitor circuits. Because under a same operating condition, the switched-capacitor circuit generally has higher conversion efficiency than the LLC resonant converter and the CDR, the switched-capacitor module in this embodiment of this application also has high conversion efficiency, thereby improving power supply efficiency. In addition, the switched-capacitor module is formed by connecting a plurality of switched-capacitor circuits in parallel. This not only can expand a capability of outputting a current by the switched-capacitor module, but also can increase an equivalent switching frequency of the switched-capacitor module (the equivalent switching frequency is equal to N*Fsw) without increasing a switching frequency of each switched-capacitor circuit, thereby reducing a pulsating current, improving current stability, reducing voltage fluctuation, and improving power supply performance of a chip. In addition, a low ripple can also be ensured without increasing a switching frequency of the switched-capacitor circuit, thereby not increasing a switching loss and a driving loss. In addition, during actual operation, the voltage Uout output by the switched-capacitor module fluctuates due to a change of the load. Especially, when the load current suddenly changes greatly, the input voltage of the first chip may drop or overshoot greatly. To resolve this problem, usually, a switching frequency and a control bandwidth may be increased to improve dynamic performance of power supplying. However, in this embodiment of this application, a switching frequency of a single switched-capacitor circuit is not additionally increased, but a plurality of switched-capacitor circuits are connected in parallel, to increase an equivalent switching frequency of the switched-capacitor module, thereby further helping increase a control bandwidth.

In addition, a transformation ratio of the switched-capacitor assembly 232 is usually n to 1. The switched-capacitor assembly 232 is formed by connecting a plurality of switched-capacitor circuits in parallel, so that an input high voltage can be converted into a low voltage for output, and a large dynamic output current can be converted into a small dynamic input current. This can improve dynamic control performance of the DC-DC conversion circuit 231 and the switched-capacitor assembly 232 that are combined with each other, thereby improving power supplying performance of the chip. In addition, the switched-capacitor assembly 232 can quickly transfer energy from a high-voltage input side to a low-voltage output side, to implement transient input and output current response, and output a high current to the first chip 211.

In addition, the voltage conversion circuit in this embodiment of this application may be used in a buck scenario. A voltage input by the voltage conversion circuit is usually high. Because the load needs to have a high dynamic response, the voltage conversion circuit needs to transfer the input voltage to the output side as quickly as possible. As a higher switching frequency results in faster energy conversion, a higher switching frequency is required. As a result, a switching loss is high, and efficiency is reduced. In addition, the voltage conversion circuit has a high input voltage, and therefore has a high requirement on withstand voltage performance of the switching transistor (the switching transistor is easily broken down), resulting in high costs. Therefore, in this application, the voltage conversion circuit is formed in a form of two-stage structure, where an input voltage of a first stage (namely, the DC-DC conversion circuit) is high, and an input voltage of a second stage (namely, the switched-capacitor assembly) is low. Because the input voltage of the first stage is high, to reduce a requirement on the withstand voltage performance of the switching transistor, a switching frequency of the first stage may be set to be low. In this way, the requirement on the withstand voltage performance of the switching transistor at the first stage can be reduced, a switching loss of the first stage can be reduced, and system efficiency is improved. However, a plurality of switched-capacitor circuits are disposed at the second stage, and a switching frequency of each switched-capacitor circuit does not need to be additionally increased. By connecting the plurality of switched-capacitor circuits in parallel, the switched-capacitor circuits are controlled to operate, so that an equivalent switching frequency (the equivalent switching frequency is equal to N*Fsw) of the switched-capacitor assembly can be increased, thereby quickly converting a voltage from an input side to an output side, and meeting dynamic performance and a response rate required by the load. In addition, because the switching frequency of each switched-capacitor circuit is not increased, in other words, the switching loss is not increased on the basis of increasing the equivalent switching frequency, it is equivalent to that the switching loss can be further reduced and the efficiency can be improved. Therefore, in this application, the voltage conversion circuit is formed in a form of two-level architecture, so that dynamic performance and a response rate required by the load can be met, and efficiency can be improved.

In this embodiment of this application, interleaved control may be performed on the Q switched-capacitor modules, to improve dynamic performance of the chip. Switching transistors at a same position in switched-capacitor circuits of different switched-capacitor modules are used as target switching transistors, and the interleaved control may be that switching signals corresponding to the target switching transistors are sequentially staggered by a specific phase difference. For example, target switching transistors of N switched-capacitor circuits in a same switched-capacitor module are staggered by a same phase difference ΔΦ1 in sequence, and ΔΦ1 may be 180/N degrees. Therefore, interleaved control or non-interleaved control may be performed on target switching transistors of different switched-capacitor modules. It may be understood that, the structures shown in FIG. 4a to FIG. 4c are used as an example, and the target switching transistor may be the first switching transistor Q1, the second switching transistor Q2, the third switching transistor Q3, or the fourth switching transistor Q4.

The following uses an example in which the target switching transistor is the first switching transistor Q1 and the switching signal is a switching signal corresponding to the first switching transistor Q1, to perform interleaved control on the Q switched-capacitor modules in the following manner:
In a first manner, first switching signals Φ1 corresponding to N switched-capacitor circuits in a same switched-capacitor module are sequentially staggered by a same phase difference ΔΦ1, and first switching signals Φ1 corresponding to different switched-capacitor modules are also sequentially staggered by a same phase difference ΔΦ2. ΔΦ1 may be 180/N degrees. In addition, ΔΦ2 may be 180/(Q*N) degrees, or ΔΦ2 may be 180/N degrees, or ΔΦ2 may be another value. This is not limited herein. For example, Q=2 and N=2 are used as an example. FIG. 9a is a signal timing diagram of a switched-capacitor module according to an embodiment of this application. Φ1_11 represents a first switching signal of a switched-capacitor circuit 23211_1 in a switched-capacitor module 2321_1, Φ1_12 represents a first switching signal of a switched-capacitor circuit 23211_2 in the switched-capacitor module 2321_1, Φ1_21 represents a first switching signal of a switched-capacitor circuit 23211_1 in a switched-capacitor module 2321_2, Φ1_22 represents a first switching signal of a switched-capacitor circuit 23211_2 in the switched-capacitor module 2321_2, I_11 represents a current output by the switched-capacitor circuit 23211_1 in the switched-capacitor module 2321_1, I_12 represents a current output by the switched-capacitor circuit 23211_2 in the switched-capacitor module 2321_1, I_21 represents a current output by the switched-capacitor circuit 23211_1 in the switched-capacitor module 2321_2, and I_22 represents a current output by the switched-capacitor circuit 23211_2 in a switched-capacitor module 2321_4. A phase difference ΔΦ between Φ1_11 and Φ1_12 is 90°, a phase difference ΔΦ between Φ1_21 and Φ1_22 is also 90°, a phase difference ΔΦ between Φ1_11 and Φ1_21 is also 90°, and a phase difference ΔΦ between Φ1_12 and Φ1_22 is also 90°. In this way, interleaved control is implemented.

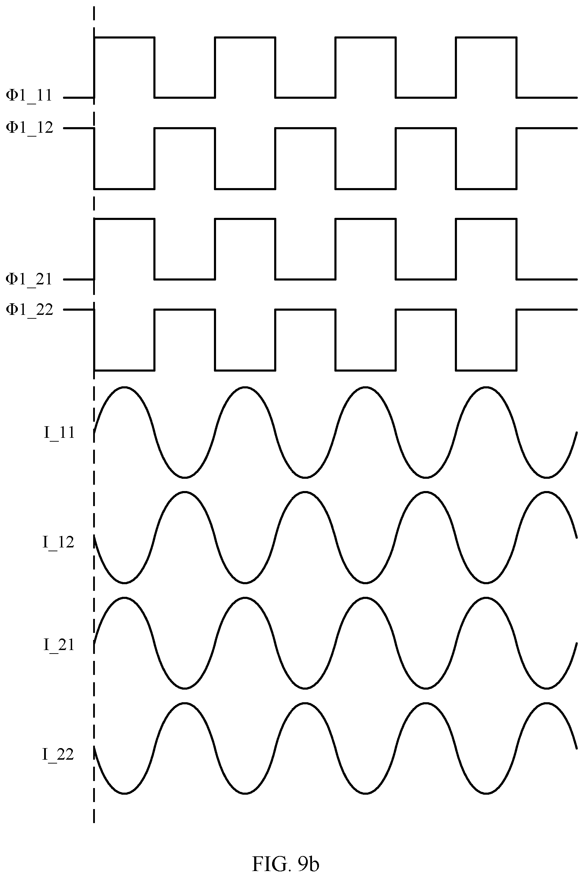

In a second manner, first switching signals Φ1 corresponding to N switched-capacitor circuits in a same switched-capacitor module are sequentially staggered by a same phase difference ΔΦ1, and first switching signals Φ1 corresponding to different switched-capacitor modules have a same phase. In addition, ΔΦ1 is 180/N degrees. For example, Q=2 and N=2 are used as an example. FIG. 9b is another signal timing diagram of a switched-capacitor module according to an embodiment of this application. Φ1_11 represents a first switching signal of a switched-capacitor circuit 23211_1 in a switched-capacitor module 2321_1, Φ1_12 represents a first switching signal of a switched-capacitor circuit 23211_2 in the switched-capacitor module 2321_1, Φ1_21 represents a first switching signal of a switched-capacitor circuit 23211_1 in a switched-capacitor module 2321_2, Φ1_22 represents a first switching signal of a switched-capacitor circuit 23211_2 in the switched-capacitor module 2321_2, I_11 represents a current output by the switched-capacitor circuit 23211_1 in the switched-capacitor module 2321_1, I_12 represents a current output by the switched-capacitor circuit 23211_2 in the switched-capacitor module 2321_1, I_21 represents a current output by the switched-capacitor circuit 23211_1 in the switched-capacitor module 2321_2, and I_22 represents a current output by the switched-capacitor circuit 23211_2 in a switched-capacitor module 2321_4. A phase difference ΔΦ between Φ1_11 and Φ1_12 is 90°, a phase difference ΔΦ between Φ1_21 and Φ1_22 is also 90°, and a phase of Φ1_11 is the same as that of Φ1_21, and a phase of Φ1_12 is also the same as that of Φ1_22. In this way, interleaved control can also be implemented.

In this embodiment of this application, non-interleaved control may alternatively be performed on the Q switched-capacitor modules, to improve dynamic performance of the chip. Switching transistors at a same position in switched-capacitor circuits of different switched-capacitor modules are used as target switching transistors, and non-interleaved control may be that switching signals corresponding to the target switching transistors have a same phase. It may be understood that, the structures shown in FIG. 4a to FIG. 4c are used as an example, and the target switching transistor may be the first switching transistor Q1, the second switching transistor Q2, the third switching transistor Q3, or the fourth switching transistor Q4.

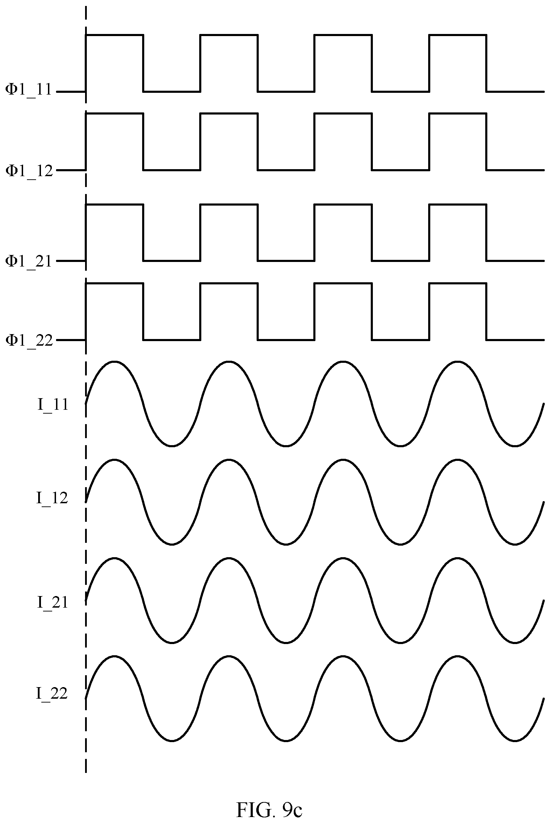

The following uses the first switching signal Φ1 as an example to describe how to perform non-interleaved control on the Q switched-capacitor modules in the following manner: First switching signals Φ1 corresponding to N switched-capacitor circuits in a same switched-capacitor module have a same phase, and first switching signals Φ1 corresponding to different switched-capacitor modules have a same phase. For example, Q=2 and N=2 are used as an example. FIG. 9c is another signal timing diagram of a switched-capacitor module according to an embodiment of this application. Φ1_11 represents a first switching signal of a switched-capacitor circuit 23211_1 in a switched-capacitor module 2321_1, Φ1_12 represents a first switching signal of a switched-capacitor circuit 23211_2 in the switched-capacitor module 2321_1, Φ1_21 represents a first switching signal of a switched-capacitor circuit 23211_1 in a switched-capacitor module 2321_2, Φ1_22 represents a first switching signal of a switched-capacitor circuit 23211_2 in the switched-capacitor module 2321_2, I_11 represents a current output by the switched-capacitor circuit 23211_1 in the switched-capacitor module 2321_1, I_12 represents a current output by the switched-capacitor circuit 23211_2 in the switched-capacitor module 2321_1, I_21 represents a current output by the switched-capacitor circuit 23211_1 in the switched-capacitor module 2321_2, and I_22 represents a current output by the switched-capacitor circuit 23211_2 in a switched-capacitor module 2321_4. Φ1_11, Φ1_12, Φ1_21, and Φ1_22 have a same phase, so that non-interleaved control can also be implemented.

The switching transistor in this embodiment of this application may be one or more of a plurality of types of switching devices such as a metal oxide semiconductor field effect transistor (metal oxide semiconductor field effect transistor, MOSFET), a bipolar junction transistor (bipolar junction transistor, BJT), an insulated gate bipolar transistor (insulated gate bipolar transistor, IGBT), and a silicon carbide (SiC) MOSFET. Details are not listed one by one in embodiments of this application. In addition, each switching transistor may include a first electrode, a second electrode, and a control electrode, where the control electrode is configured to control the switching transistor to be turned on or turned off. When the switching transistor is turned on, a current can be transmitted between the first electrode and the second electrode of the switching transistor. When the switching transistor is turned off, a current cannot be transmitted between the first electrode and the second electrode of the switching transistor. The MOSFET is used as an example. A control electrode of the switching transistor is a gate, a first electrode of the switching transistor may be a source, and a second electrode may be a drain; or the first electrode may be a drain, and the second electrode may be a source.

It may be understood that the foregoing is merely an example for describing specific structures of the resonant switched-capacitor circuit and the non-resonant switched-capacitor circuit provided in embodiments of this application. During specific implementation, the specific structures of the resonant switched-capacitor circuit and the non-resonant switched-capacitor circuit are not limited to the foregoing structures provided in embodiments of this application, and may alternatively be other structures known to a person skilled in the art. This is not limited herein.

During actual operation, the voltage Uout output by the switched-capacitor module fluctuates due to a change of the load. To reduce the fluctuation, the voltage Uout may be further adjusted to compensate for dynamic performance of the first chip (namely, the load). The following describes, by using an example, a control manner of the compensation voltage Uout.

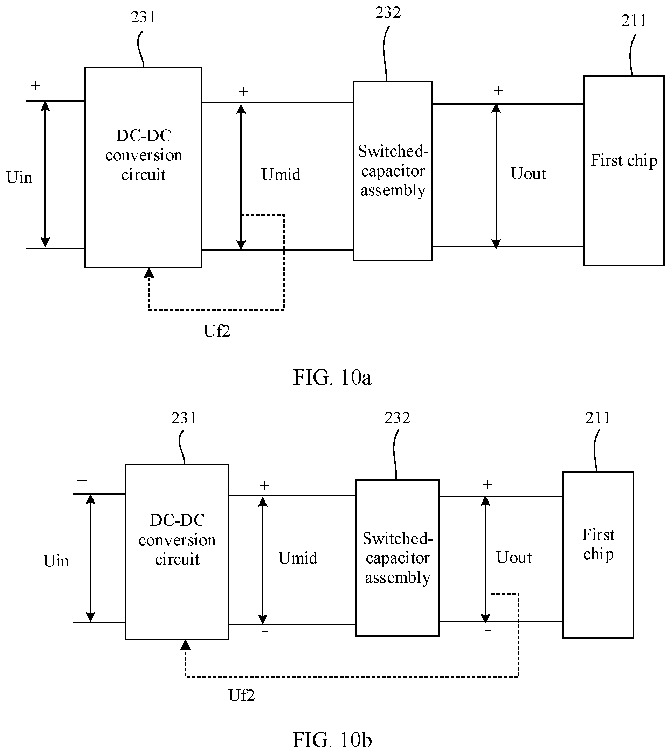

In a first control manner, the DC-DC conversion circuit 231 may adjust a voltage at an output end of the DC-DC conversion circuit 231 based on a voltage Umid output by the output end of the DC-DC conversion circuit 231. For example, FIG. 10a is a circuit schematic of a control manner according to an embodiment of this application. The DC-DC conversion circuit 231 obtains only the voltage Umid at the output end of the DC-DC conversion circuit 231, and uses the voltage Umid as a feedback voltage Uf2, so that the DC-DC conversion circuit 231 may determine, based on a relationship between the feedback voltage Uf2 and a first voltage threshold, whether the feedback voltage Uf2 satisfies the first voltage threshold. If the feedback voltage Uf2 does not satisfy the first voltage threshold, there are two cases: The feedback voltage Uf2 is greater than the first voltage threshold, and the feedback voltage Uf2 is less than the first voltage threshold. When the feedback voltage Uf2 is greater than the first voltage threshold, the voltage at the output end of the DC-DC conversion circuit 231 is adjusted to obtain an adjusted voltage Umid. In this way, the switched-capacitor assembly 232 obtain a voltage Uout through buck conversion based on the adjusted voltage Umid, to implement compensation for the voltage Uout, thereby improving stability of the voltage Uout, and further dynamically determining dynamic performance of the first chip 211 by using the DC-DC conversion circuit 231. When the feedback voltage Uf2 is less than the first voltage threshold, the voltage at the output end of the DC-DC conversion circuit 231 may also be adjusted to obtain an adjusted voltage Umid. If the feedback voltage Uf2 satisfies the first voltage threshold, the voltage at the output end of the DC-DC conversion circuit 231 does not need to be adjusted, thereby saving power. It may be understood that the first voltage threshold may be ±ΔV1, that the feedback voltage Uf2 is greater than the first voltage threshold means that the feedback voltage Uf2 is greater than +ΔV1, and that the feedback voltage Uf2 is less than the first voltage threshold means that the feedback voltage Uf2 is less than -ΔV1. In addition, a specific value of ±ΔV1 may be determined based on an application scenario, and is not limited herein. The following is similar, and details are not described one by one.

In a second control manner, the DC-DC conversion circuit 231 may alternatively adjust a voltage at an output end of the DC-DC conversion circuit 231 based on a voltage Uout output by the output end of the switched-capacitor assembly 232. For example, FIG. 10b is a circuit schematic of another control manner according to an embodiment of this application. Alternatively, the DC-DC conversion circuit 231 may obtain only the voltage Uout at the output end of the switched-capacitor assembly 232, and use the voltage Uout as a feedback voltage Uf2, so that the DC-DC conversion circuit 231 may determine, based on a relationship between the feedback voltage Uf2 and a second voltage threshold, whether the feedback voltage Uf2 satisfies the second voltage threshold. If the feedback voltage Uf2 does not satisfy the second voltage threshold, there are two cases: The feedback voltage Uf2 is greater than the second voltage threshold, and the feedback voltage Uf2 is less than the second voltage threshold. When the feedback voltage Uf2 is greater than the second voltage threshold, the voltage at the output end of the DC-DC conversion circuit 231 is adjusted to obtain an adjusted voltage Umid. For another operating process of this control manner, refer to the description in the first control manner. Details are not described herein again. In addition, the voltage Uout is directly used as the feedback voltage Uf2 to adjust the voltage output by the DC-DC conversion circuit 231, to keep the voltage at the output end of the DC-DC conversion circuit 231 stable through voltage adjustment, so that accuracy of the compensation voltage Uout can be improved, and stability of the voltage Uout can be further improved. If the feedback voltage Uf2 is less than the second voltage threshold, the voltage at the output end of the DC-DC conversion circuit 231 may also be adjusted to obtain an adjusted voltage Umid. If the feedback voltage Uf2 satisfies the second voltage threshold, the voltage at the output end of the DC-DC conversion circuit 231 does not need to be adjusted, thereby saving power. It may be understood that the second voltage threshold may be ±ΔV2, that the feedback voltage Uf2 is greater than the second voltage threshold means that the feedback voltage Uf2 is greater than +ΔV2, and that the feedback voltage Uf2 is less than the second voltage threshold means that the feedback voltage Uf2 is less than -ΔV2. In addition, a specific value of ±ΔV2 may be determined based on an application scenario, and is not limited herein. The following is similar, and details are not described one by one.

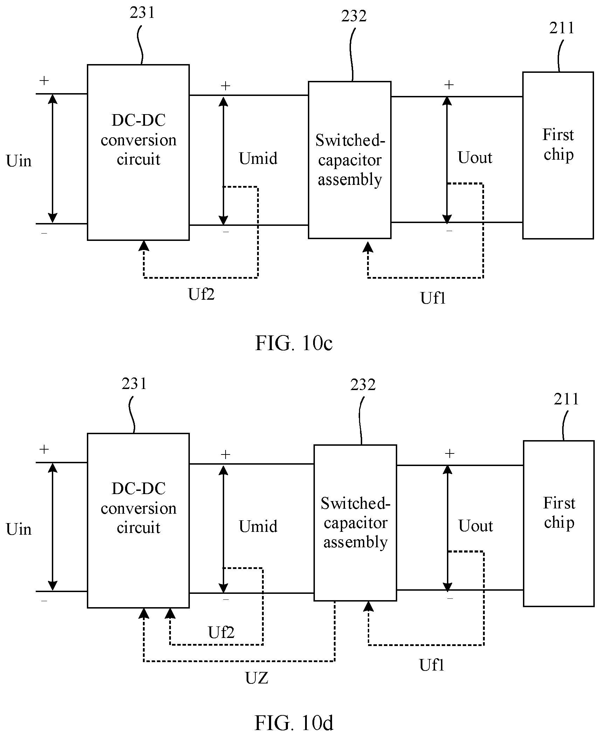

In a third control manner, compared with the DC-DC conversion circuit 231, the switched-capacitor assembly 232 can quickly respond to a voltage Uout at the output end of the switched-capacitor assembly 232. Therefore, the switched-capacitor assembly 232 and the DC-DC conversion circuit 231 may be used to separately adjust the voltage at the output end of each of the switched-capacitor assembly 232 and the DC-DC conversion circuit 231. For example, FIG. 10c is a circuit schematic of another control manner according to an embodiment of this application. The DC-DC conversion circuit 231 obtains only a voltage Umid at an output end of the DC-DC conversion circuit 231, and uses the voltage Umid as a feedback voltage Uf2, so that the DC-DC conversion circuit 231 may adjust, based on a relationship between the feedback voltage Uf2 and a first voltage threshold, a voltage at the output end of the DC-DC conversion circuit 231 if the feedback voltage Uf2 is greater than the first voltage threshold, to obtain an adjusted voltage Umid. The switched-capacitor assembly 232 obtains a voltage Uout at an output end of the switched-capacitor assembly 232, and uses the voltage Uout as a feedback voltage Uf1, so that the switched-capacitor assembly 232 may adjust, based on a relationship between the feedback voltage Uf1 and a second voltage threshold, a voltage at the output end of the switched-capacitor assembly 232 if the feedback voltage Uf1 is greater than the second voltage threshold, to obtain an adjusted voltage Uout. In this way, the DC-DC conversion circuit 231 adjusts, based on the feedback of the voltage Umid at the output end of the DC-DC conversion circuit 231, the output voltage Umid, so as to keep the voltage Umid at the output end of the DC-DC conversion circuit 231 stable through voltage adjustment. In addition, the switched-capacitor assembly 232 adjusts, based on the feedback of the voltage Uout at the output end of the switched-capacitor assembly 232, the output voltage Uout, so as to keep the voltage Uout at the output end of the switched-capacitor assembly 232 stable through voltage adjustment. Therefore, voltage adjustment is separately performed in combination with a two-level architecture, so that the voltage Uout can be quickly stabilized, thereby improving load voltage stability. Certainly, if the feedback voltage Uf2 is less than the first voltage threshold, the voltage at the output end of the DC-DC conversion circuit 231 may also be adjusted to obtain an adjusted voltage Umid. If the feedback voltage Uf1 is less than the second voltage threshold, the voltage at the output end of the switched-capacitor assembly 232 may also be adjusted to obtain an adjusted voltage Uout. If the feedback voltage Uf2 satisfies the first voltage threshold, the voltage at the output end of the DC-DC conversion circuit 231 does not need to be adjusted, thereby saving power. In addition, if the feedback voltage Uf1 satisfies the second voltage threshold, the voltage at the output end of the switched-capacitor assembly 232 does not need to be adjusted. It may be understood that, that the feedback voltage Uf1 is greater than the second voltage threshold means that the feedback voltage Uf1 is greater than +ΔV2, and that the feedback voltage Uf1 is less than the second voltage threshold means that the feedback voltage Uf1 is less than -ΔV2.

In a fourth control manner, based on the third control manner, because the switched-capacitor assembly 232 can quickly respond to a voltage Uout at the output end of the switched-capacitor assembly 232, fast adjustment can be implemented. In this way, although the voltage Uout can be adjusted, the switched-capacitor assembly 232 cannot operate at an optimal operating efficiency point, thereby reducing efficiency. To enable the switched-capacitor assembly 232 to operate at the optimal operating efficiency point again, the switched-capacitor assembly 232 may send a linkage voltage adjustment instruction to the DC-DC conversion circuit 231, to control the DC-DC conversion circuit 231 to adjust a voltage Umid at the output end of the DC-DC conversion circuit 231, so that the switched-capacitor assembly 232 can operate at the optimal power point. Therefore, two-level linkage control is implemented on the basis that the switched-capacitor assembly 232 and the DC-DC conversion circuit 231 respectively perform voltage adjustment based on the voltage at the output end of the switched-capacitor assembly 232, thereby improving operating efficiency of the switched-capacitor assembly 232, and further improving operating efficiency of a system. For example, FIG. 10d is a circuit schematic of another control manner according to an embodiment of this application. For an operating process in which the switched-capacitor assembly 232 and the DC-DC conversion circuit 231 respectively perform voltage adjustment on the voltage at the output end of each of the switched-capacitor assembly 232 and the DC-DC conversion circuit 231, refer to content in the third control manner. Details are not described herein again. The following describes a two-level linkage control process. The switched-capacitor assembly 232 may send a linkage voltage adjustment instruction UZ to the DC-DC conversion circuit 231 in response to adjustment of the voltage at the output end of the switched-capacitor assembly 232. The DC-DC conversion circuit 231 may adjust a voltage Umid at the output end of the DC-DC conversion circuit 231 in response to a linkage voltage adjustment instruction UZ. Then, the switched-capacitor assembly 232 obtains an adjusted voltage Uout through conversion based on the adjusted voltage Umid, to improve stability of the voltage Uout and enable the switched-capacitor assembly 232 to return to an optimal operating efficiency point.

In some examples, the switched-capacitor assembly 232 may send a linkage voltage adjustment instruction UZ carrying buck information to the DC-DC conversion circuit 231 in response to adjusting, by the switched-capacitor assembly 232, the voltage Uout at the output end of the switched-capacitor assembly 232 to decrease. The DC-DC conversion circuit 231 may decrease the voltage Umid at the output end of the DC-DC conversion circuit 231 in response to the linkage voltage adjustment instruction UZ carrying the buck information, and the switched-capacitor assembly 232 obtains a decreased voltage Uout through conversion based on the decreased voltage Umid. In this way, because the voltage at the output end of the switched-capacitor assembly 232 is adjusted to decrease, the DC-DC conversion circuit 231 needs to be controlled to decrease the voltage at the output end of the DC-DC conversion circuit 231, so that the switched-capacitor assembly 232 can operate at the optimal power point again.

In some other examples, the switched-capacitor assembly 232 may send a linkage voltage adjustment instruction UZ carrying boost information to the DC-DC conversion circuit 231 in response to adjusting, by the switched-capacitor assembly 232, the voltage Uout at the output end of the switched-capacitor assembly 232 to increase. The DC-DC conversion circuit 231 may increase the voltage Umid at the output end of the DC-DC conversion circuit 231 in response to the linkage voltage adjustment instruction UZ carrying buck information. Then, the switched-capacitor assembly 232 obtains the increased voltage Uout through conversion based on the increased voltage Umid. In this way, because the voltage at the output end of the switched-capacitor assembly 232 is adjusted to increase, the DC-DC conversion circuit 231 needs to be controlled to increase the voltage at the output end of the DC-DC conversion circuit 231, so that the switched-capacitor assembly 232 can operate at the optimal power point again.

For example, during an actual application, a phase, a switching frequency, and a duty cycle that correspond to the switched-capacitor circuit are respectively set to specified values, that is, the phase corresponds to a specified value X0, the switching frequency corresponds to a specified value F0, and the duty cycle corresponds to a specified value Z0, so that the switched-capacitor circuit can perform voltage conversion under control of the specified values X0, F0, and Z0, and operate at an optimal efficiency point. However, when adjusting the output voltage Uout, the switched-capacitor assembly 232 may adjust the specified value X0 to a target value X0', adjust the specified value F0 to a target value F0', and adjust the specified value Z0 to a target value Z0', so that the output voltage Uout is adjusted to a first target voltage Uout'. Because the target values X0', F0', and Z0' respectively deviate from the corresponding specified values X0, F0, and Z0, the switched-capacitor circuit in the switched-capacitor assembly 232 does not operate at the optimal efficiency point. Therefore, the switched-capacitor assembly 232 sends a linkage voltage adjustment instruction to the DC-DC conversion circuit 231, and the DC-DC conversion circuit 231 adjusts the voltage Umid at the output end of the DC-DC conversion circuit 231 to a second target voltage Umid' in response to the linkage voltage adjustment instruction. In addition, after the voltage Umid at the output end of the DC-DC conversion circuit 231 is adjusted to the second target voltage Umid', the switched-capacitor assembly 232 may re-adjust the target values X0', F0', and Z0' to the specified values X0, F0, and Z0, so that the switched-capacitor circuit can operate at the optimal efficiency point, thereby ensuring conversion efficiency. It may be understood that, when adjusting the output voltage Uout of the switched-capacitor assembly 232, the switched-capacitor assembly 232 may alternatively only need to adjust the specified value X0 to the target value X0' and then adjust the target value X0' back to the specified value X0, or adjust the specified value F0 to the target value F0' and then adjust the target value F0' back to the specified value F0, or adjust the specified value Z0 to the target value Z0' and then adjust the target value Z0' back to the specified value Z0, or adjust each of two combinations of the specified values X0, F0, and Z0 to the target values and then adjust each target value back to the corresponding specified value. Details are not described herein. Therefore, one or more of the phase, the switching frequency, and the duty cycle that correspond to the switched-capacitor circuit may be adjusted, so that the switched-capacitor circuit adjusts the voltage Uout to decrease or increase.

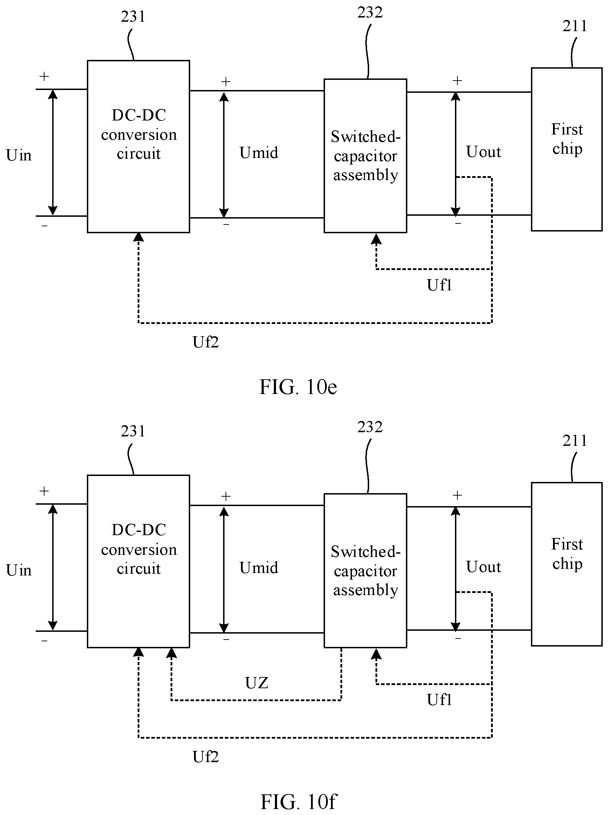

In a fifth control manner, the DC-DC conversion circuit 231 and the switched-capacitor assembly 232 may alternatively be enabled to separately adjust a voltage based on a voltage Uout at the output end of the switched-capacitor assembly 232, thereby improving operating efficiency and improving dynamic performance of the chip. For example, FIG. 10e is a circuit schematic of another control manner according to an embodiment of this application. In addition, a difference between an operating process of this control manner and an operating process of the third control manner lies in that: The DC-DC conversion circuit 231 obtains the voltage Uout at the output end of the switched-capacitor assembly 232, and uses the voltage Uout as a feedback voltage Uf2, so that the DC-DC conversion circuit 231 may adjust, based on a relationship between the feedback voltage Uf2 and a second voltage threshold, a voltage Umid at the output end of the DC-DC conversion circuit 231 if the feedback voltage Uf2 does not satisfy the second voltage threshold, to obtain an adjusted voltage Umid. For another operating processes of this control manner and an operating process of the third control manner, details are not described herein.

In a sixth control manner, based on the fifth control manner, because the switched-capacitor assembly 232 can quickly respond to a voltage Uout at the output end of the switched-capacitor assembly 232, fast adjustment can be implemented. In this way, although the voltage Uout can be adjusted, the switched-capacitor assembly 232 cannot operate at the optimal operating efficiency point. To enable the switched-capacitor assembly 232 to operate at the optimal operating efficiency point again, the switched-capacitor assembly 232 may send a linkage voltage adjustment instruction to the DC-DC conversion circuit 231, to control the DC-DC conversion circuit 231 to adjust the voltage Umid at the output end of the DC-DC conversion circuit 231, so that the switched-capacitor assembly 232 can operate at the optimal power point. Therefore, two-level linkage control is implemented on the basis that the switched-capacitor assembly 232 and the DC-DC conversion circuit 231 respectively perform voltage adjustment based on the voltage Uout, thereby improving operating efficiency of the switched-capacitor assembly 232, and further improving operating efficiency of a system. For example, FIG. 10f is a circuit schematic of another control manner according to an embodiment of this application. For an operating process in which the switched-capacitor assembly 232 and the DC-DC conversion circuit 231 adjust voltages based on a voltage Uout, refer to content in the fifth control manner. Details are not described herein again. The following describes a two-level linkage control process. The switched-capacitor assembly 232 may send a linkage voltage adjustment instruction UZ to the DC-DC conversion circuit 231 in response to adjustment of the voltage at the output end of the switched-capacitor assembly 232. The DC-DC conversion circuit 231 may adjust a voltage Umid at the output end of the DC-DC conversion circuit 231 in response to a linkage voltage adjustment instruction UZ. Then, the switched-capacitor assembly 232 obtains an adjusted voltage Uout through conversion based on the adjusted voltage Umid, to improve stability of the voltage Uout and enable the switched-capacitor assembly 232 to return to an optimal operating efficiency point. For another operating processes of this control manner and an operating process of the sixth control manner, details are not described herein.

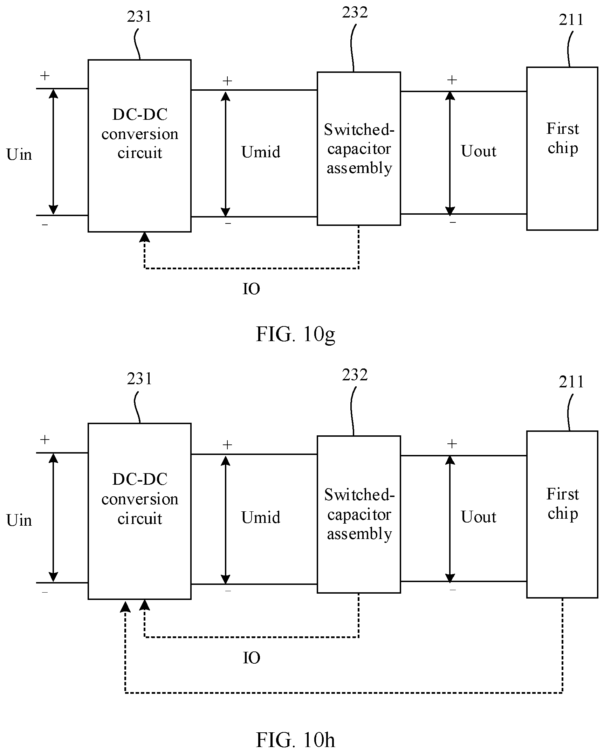

In a seventh control manner, to keep a voltage Uout stable, the switched-capacitor assembly 232 (especially the resonant switched-capacitor circuit) directly adjusts a voltage Uout at the output end of the switched-capacitor assembly. This reduces efficiency of the switched-capacitor assembly 232, thereby reducing efficiency of the entire voltage conversion circuit. Therefore, the DC-DC conversion circuit 231 may adjust, based on a current IO at an output end of the switched-capacitor assembly 232, a voltage Umid at the output end of the DC-DC conversion circuit, so that the switched-capacitor assembly 232 obtains a stable voltage Uout through conversion based on the adjusted Umid, thereby improving operating efficiency. For example, FIG. 10g is a circuit schematic of another control manner according to an embodiment of this application. The switched-capacitor assembly 232 may feed back a current IO at an output end of the switched-capacitor assembly 232 to the DC-DC conversion circuit 231. To keep Uout stable, the DC-DC conversion circuit 231 may obtain, through calculation based on the current IO and a formula Umid=n*Uout+IO*n*ROw, a voltage Umid that needs to be adjusted, and then control the DC-DC conversion circuit 231 to operate based on the calculated voltage Umid, so that the DC-DC conversion circuit 231 converts a voltage Uin into an adjusted voltage Umid, and the switched-capacitor assembly 232 obtains a stable voltage Uout through conversion based on the adjusted Umid. In this way, the switched-capacitor assembly 232 may not need to be controlled to perform voltage adjustment, thereby improving efficiency. Herein, n represents a transformation ratio of the switched-capacitor assembly 232, and ROw represents an equivalent direct current output resistance of the switched-capacitor assembly 232 in a steady state (that is, an input current of the load is stable).

In addition, based on this control manner, when the input current (namely, the current IO at the output end of the switched-capacitor assembly 232) of the load changes, the DC-DC conversion circuit 231 adjusts the voltage Umid, so that the switched-capacitor assembly 232 can operate in an ideal resonance mode within a full load range, and satisfy a zero voltage switch (Zero Voltage Switch, ZVS) or zero current switch (Zero Current Switch, ZCS). This can greatly improve efficiency of the switched-capacitor assembly 232, and further enhance overall efficiency of the voltage conversion circuit. In comparison with a solution without linkage voltage adjustment, a power loss is reduced by 50% or more, full-load efficiency is improved by 8% or more, and a current density of the switched-capacitor assembly 232 is increased by 40% or more. In addition, during an actual application, the full-load efficiency can be improved by 5% or more, and a problem that voltage adjustment efficiency of the resonant switched-capacitor circuit decreases can be resolved. In a computing scenario, the computing power or power consumption ratio can be increased, and a battery life can be prolonged.

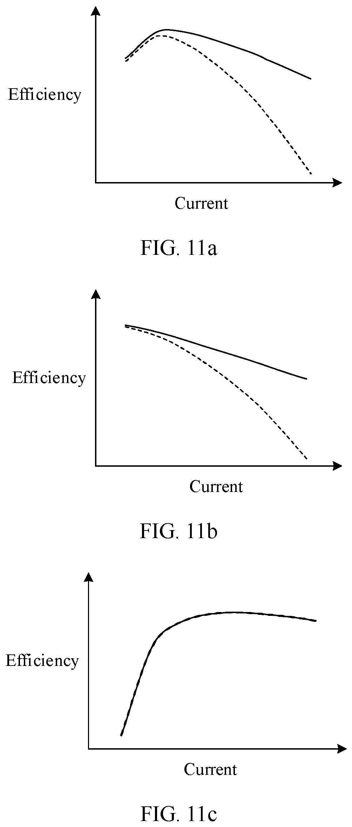

In this embodiment of this application, efficiency of the seventh control manner and efficiency of the control manner in which the switched-capacitor assembly 232 directly adjusts the voltage Uout at the output end of the switched-capacitor assembly 232 are further compared through simulation. For a simulation result, refer to FIG. 11a to FIG. 11c. FIG. 11a is a diagram of a simulation result of efficiency of the entire voltage conversion circuit. FIG. 11b is a diagram of a simulation result of efficiency of the switched-capacitor assembly 232. FIG. 11c is a diagram of a simulation result of efficiency of the DC-DC conversion circuit 231. In FIG. 11a to FIG. 11c, a solid line represents efficiency when the voltage conversion circuit uses the seventh control manner, and a dashed line represents efficiency when the voltage conversion circuit uses the control manner in which the switched-capacitor assembly 232 directly adjusts the voltage Uout at the output end of the switched-capacitor assembly 232. It can be seen from FIG. 11a to FIG. 11c that, in comparison with a control manner in which the switched-capacitor assembly 232 directly adjusts the voltage Uout at the output end of the switched-capacitor assembly 232, efficiency of the DC-DC conversion circuit 231 remains basically unchanged when the voltage conversion circuit uses the seventh control manner, efficiency of the switched-capacitor assembly 232 is improved (for example, improved by 9% or more), and overall efficiency of the voltage conversion circuit is also improved (for example, improved by 8.5% or more).

In an eighth control manner, based on the seventh control manner, the voltage at the output end of the DC-DC conversion circuit 231 may alternatively be adjusted according to a requirement of the first chip 211, so that the voltage at the output end of the switched-capacitor assembly 232 satisfies the requirement of the first chip 211. For example, the DC-DC conversion circuit 231 may adjust, based on a current IO at the output end of the switched-capacitor assembly 232 and a first voltage adjustment instruction output by the first chip 211, a voltage Umid at the output end of the DC-DC conversion circuit, so that the switched-capacitor assembly 232 obtains a stable voltage Uout through conversion based on the adjusted Umid, thereby improving operating efficiency. For example, FIG. 10h is a circuit schematic of another control manner according to an embodiment of this application. The switched-capacitor assembly 232 may feed back a current IO at the output end of the switched-capacitor assembly 232 to the DC-DC conversion circuit 231. To enable Uout to satisfy a requirement of the first chip 211, the DC-DC conversion circuit 231 may obtain, through calculation based on the first voltage adjustment instruction output by the first chip 211, the current IO, and a formula Umid=n*Uout+IO*n*ROw+n*ΔVAVS, a voltage Umid that needs to be adjusted, and then control the DC-DC conversion circuit 231 to operate based on the calculated voltage Umid, so that the DC-DC conversion circuit 231 converts a voltage Uin into an adjusted voltage Umid, and the switched-capacitor assembly 232 obtains the voltage Uout that satisfies the requirement of the first chip 211 through conversion based on the adjusted Umid. In this way, the switched-capacitor assembly 232 may not need to be controlled to perform voltage adjustment, thereby improving efficiency. ΔVAVS is a voltage adjustment step obtained based on the first voltage adjustment instruction. For example, ΔVAVS may be obtained by using a formula, or ΔVAVS may be obtained by using a lookup table. This is not specifically limited herein.

For example, the first voltage adjustment instruction may be sent by the first chip 211 to the DC-DC conversion circuit 231 through a communication connection or physical connection. Alternatively, the first voltage adjustment instruction may be sent by the first chip 211 to the switched-capacitor assembly 232 through a communication connection or physical connection, and then the switched-capacitor assembly 232 sends the first voltage adjustment instruction to the DC-DC conversion circuit 231 through a communication connection or physical connection.

In addition, based on the control manner, when the output voltage Uout needs to be adjusted, the DC-DC conversion circuit 231 adjusts the output voltage Umid, so that the output voltage Uout of the switched-capacitor assembly 232 is still near Umid/n, is in an ideal resonance mode, and meets ZVS or ZCS. This can greatly improve efficiency of the switched-capacitor assembly 232, thereby ensuring high efficiency while meeting a wide range of changes in the output voltage Uout. In addition, during an actual application, the full-load efficiency can be improved by 5% or more, and a problem that voltage adjustment efficiency of the resonant switched-capacitor circuit decreases can be resolved. In a computing scenario, the computing power or power consumption ratio can be increased, and a battery life can be prolonged.

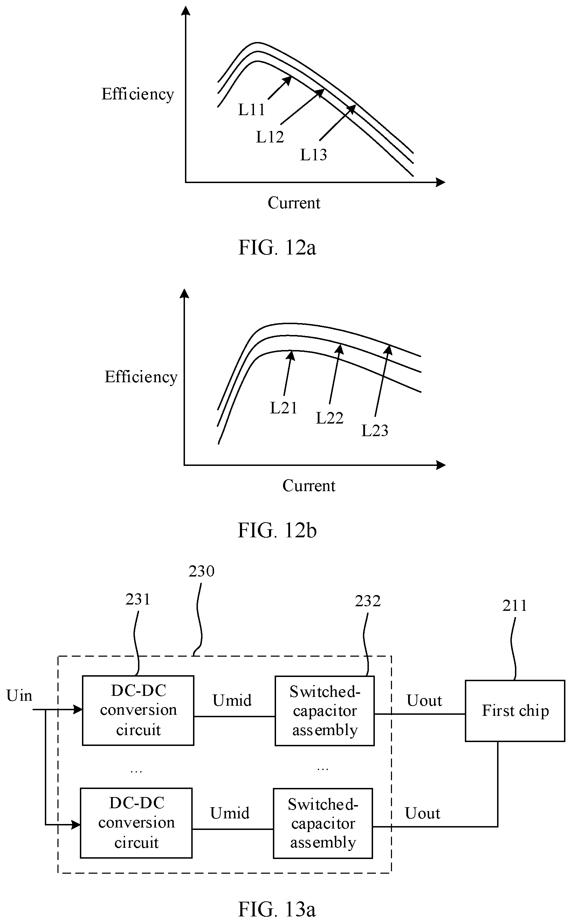

In this embodiment of this application, an example in which n=2 is further used. Efficiency of adjusting the voltage Uout to 0.8 V, 0.9 V, and 1.0 V respectively in the eighth control manner is compared through simulation. For a simulation result, refer to FIG. 12a and FIG. 12b. FIG. 12a is a diagram of a simulation result of efficiency of the entire voltage conversion circuit. FIG. 12b is a diagram of a simulation result of efficiency of the DC-DC conversion circuit 231. L11 represents efficiency of the entire voltage conversion circuit when the voltage Uout is 0.8 V, L12 represents efficiency of the entire voltage conversion circuit when the voltage Uout is 0.9 V, and L13 represents efficiency of the entire voltage conversion circuit when the voltage Uout is 1.0 V. L21 represents efficiency of the entire voltage conversion circuit when Umid is 1.6 V, L22 represents efficiency of the entire voltage conversion circuit when Umid is 1.8 V, and L23 represents efficiency of the entire voltage conversion circuit when Umid is 2.0 V. It can be seen from FIG. 12a and FIG. 12b that, when the voltage conversion circuit adjusts the voltage Uout to different values in the eighth control manner, the entire voltage conversion circuit has a basically same efficiency trend, and no large change occurs. In addition, the DC-DC conversion circuit 231 also has a basically same efficiency trend, and no large change occurs.

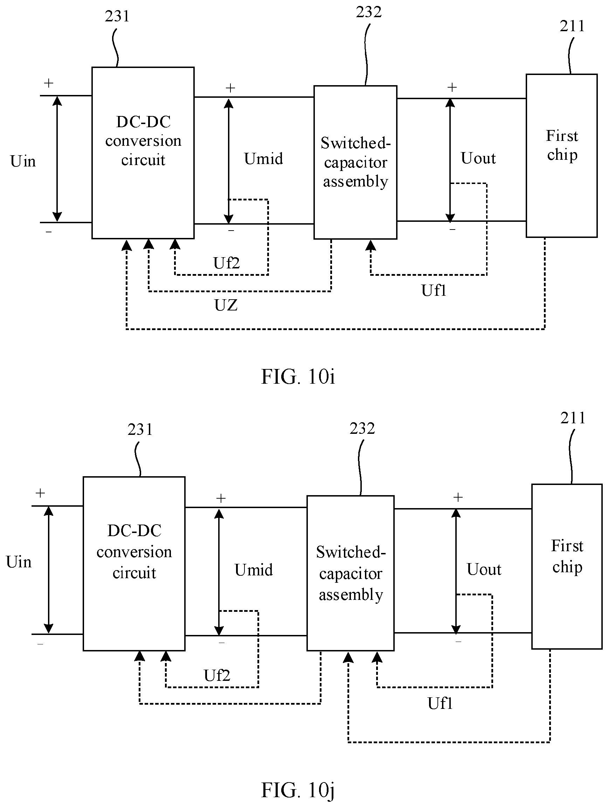

In a ninth control manner, the voltage at the output end of the DC-DC conversion circuit 231 may alternatively be adjusted according to a requirement of the first chip 211, so that the voltage at the output end of the switched-capacitor assembly 232 satisfies the requirement of the first chip 211. For example, FIG. 10i is a circuit schematic of another control manner according to an embodiment of this application. The DC-DC conversion circuit 231 can adjust a voltage Umid at an output end of the DC-DC conversion circuit 231 based on a second voltage adjustment instruction output by the first chip 211, and then convert the adjusted voltage Umid into a voltage Uout through the switched-capacitor assembly 232, to meet a voltage required by the first chip 211. Further, in a process in which the DC-DC conversion circuit 231 adjusts a voltage based on the second voltage adjustment instruction, the voltage Uout may be fine-tuned in combination with one of the first control manner to the sixth control manner, to improve operating efficiency of the switched-capacitor assembly 232 and dynamic performance of the chip.

In a tenth control manner, a voltage at the output end of the switched-capacitor assembly 232 may be further adjusted according to a requirement of the first chip 211, to meet the requirement of the first chip 211. For example, FIG. 10j is a circuit schematic of another control manner according to an embodiment of this application. The switched-capacitor assembly 232 can adjust a voltage Uout at an output end of the switched-capacitor assembly 232 based on a third voltage adjustment instruction output by the first chip 211, to meet a voltage required by the first chip 211. Further, in a process in which the switched-capacitor assembly 232 adjusts a voltage based on the third voltage adjustment instruction, the voltage Uout may be fine-tuned in combination with one of the first control manner to the sixth control manner, to improve operating efficiency of the switched-capacitor assembly 232 and dynamic performance of the chip.

Further, the ninth control manner and the tenth control manner may alternatively be combined with each other, so as to further implement fine adjustment of the output voltage Uout through of linkage control, and improve operating efficiency of the switched-capacitor module and dynamic performance of the chip.

It may be understood that, for the first control manner and the second control manner, because the switched-capacitor circuit does not need to be controlled to fine-tune the output voltage Uout, the switched-capacitor circuit in the switched-capacitor module is disposed as a resonant switched-capacitor circuit or a non-resonant switched-capacitor circuit. However, for the third control manner to the tenth control manner, because the switched-capacitor circuit needs to be controlled to fine-tune the output voltage Uout, the switched-capacitor circuit is disposed as a resonant switched-capacitor circuit, to fine-tune the output voltage Uout.

The switched-capacitor assembly 232 in this application may operate independently, or operate in parallel, or operate in series, or operate in combination with another different power converter, including but not limited to the following connection manners shown in FIG. 13a to FIG. 13g, or may be a combination thereof or a variant thereof.

FIG. 13a is a block diagram of a structure of the voltage conversion circuit and the first chip according to an embodiment of this application. Refer to FIG. 13a. The voltage conversion circuit 230 includes a plurality of DC-DC conversion circuits 231 and a plurality of switched-capacitor assemblies 232. The plurality of DC-DC conversion circuits 231 may be connected to the plurality of switched-capacitor assemblies 232 in a one-to-one correspondence, and output ends of the plurality of switched-capacitor assemblies 232 are all connected to a power supply pin of the first chip 211, to supply power to the first chip 211.

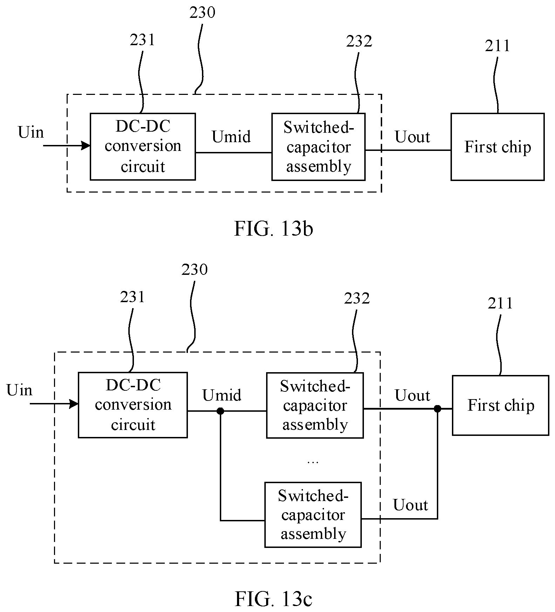

FIG. 13b is a block diagram of another structure of the voltage conversion circuit and the first chip according to an embodiment of this application. Refer to FIG. 13b. The voltage conversion circuit 230 includes one DC-DC conversion circuit 231 and one switched-capacitor assembly 232 that are connected to each other, and the switched-capacitor assembly 232 is connected to the first chip 211 to supply power to the first chip 211.

FIG. 13c is a block diagram of another structure of the voltage conversion circuit and the first chip according to an embodiment of this application. Refer to FIG. 13c. The voltage conversion circuit 230 includes one DC-DC conversion circuit 231 and a plurality of switched-capacitor assemblies 232. Input ends of the plurality of switched-capacitor assemblies 232 are connected in parallel and then connected to an input end of the DC-DC conversion circuit 231, and output ends of the plurality of switched-capacitor assemblies 232 are all connected to a power supply pin of the first chip 211, to supply power to the first chip 211.

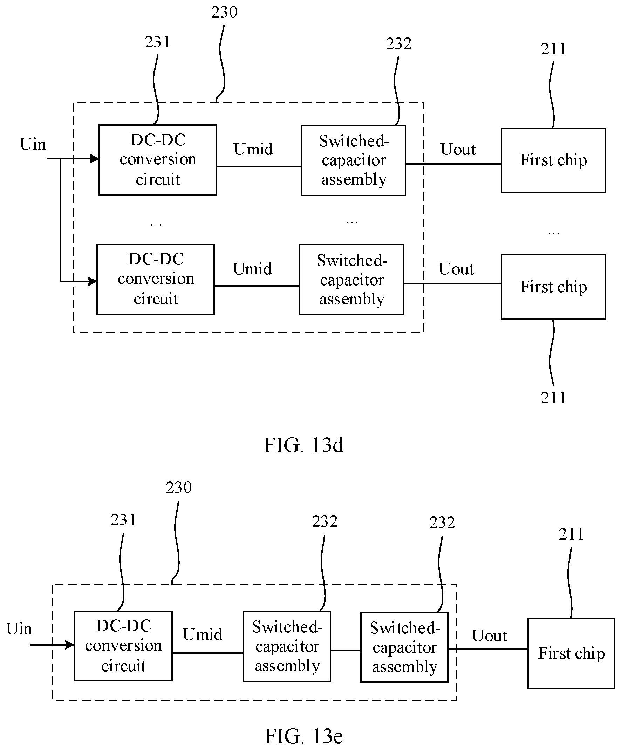

FIG. 13d is a block diagram of another structure of the voltage conversion circuit and the first chip according to an embodiment of this application. Refer to FIG. 13d. The voltage conversion circuit 230 includes a plurality of DC-DC conversion circuits 231 and a plurality of switched-capacitor assemblies 232, and there are also a plurality of first chips 211. The plurality of DC-DC conversion circuits 231, the plurality of switched-capacitor assemblies 232, and the plurality of first chips 211 are connected in a one-to-one correspondence, so that the corresponding first chips 211 are powered through the DC-DC conversion circuits 231 and the switched-capacitor assemblies 232.

FIG. 13e is a block diagram of another structure of the voltage conversion circuit and the first chip according to an embodiment of this application. Refer to FIG. 13e. The voltage conversion circuit 230 includes one DC-DC conversion circuit 231 and a plurality of switched-capacitor assemblies 232, and there is also one first chip 211. The plurality of switched-capacitor assemblies 232 may be connected in series in sequence, and then connected to the first chip 211, to supply power to the first chip 211.

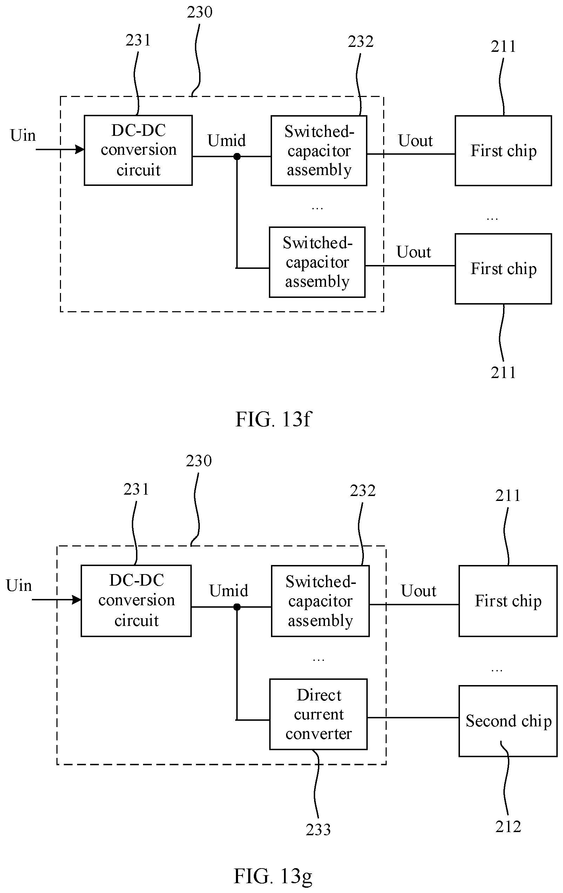

FIG. 13f is a block diagram of another structure of the voltage conversion circuit and the first chip according to an embodiment of this application. Refer to FIG. 13f. The voltage conversion circuit 230 includes one DC-DC conversion circuit 231 and a plurality of switched-capacitor assemblies 232, and there are also a plurality of first chips 211. The plurality of switched-capacitor assemblies 232 and the plurality of first chips 211 may be connected in a one-to-one correspondence, and input ends of the plurality of switched-capacitor assemblies 232 are all connected to an output end of the DC-DC conversion circuit 231, to supply power to each first chip 211.

FIG. 13g is a block diagram of another structure of the voltage conversion circuit and the first chip according to an embodiment of this application. Refer to FIG. 13g. The voltage conversion circuit 230 includes one DC-DC conversion circuit 231, one or more switched-capacitor assemblies 232, and one or more direct current converters 233. There is one or more first chips 211, and the voltage conversion circuit further includes one or more second chips 212. The one or more switched-capacitor assemblies 232 may be connected to the one or more first chips 211 in a one-to-one correspondence, and input ends of the switched-capacitor assemblies 232 are all connected to an output end of the DC-DC conversion circuit 231, to supply power to each first chip 211. The one or more direct current converters 233 may be connected to the one or more second chips 212 in a one-to-one correspondence, and an input end of the direct current converter 233 is connected to an output end of the DC-DC conversion circuit 231, to supply power to each second chip 212. For example, the direct current converter 233 may have a same structure as that of the DC-DC conversion circuit.

In combination with a specific diagram of a structure, the following specifically describes a specific structure of the voltage conversion circuit provided in embodiments of this application.

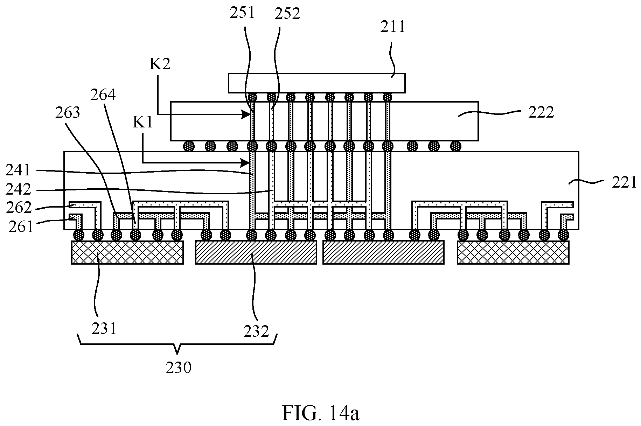

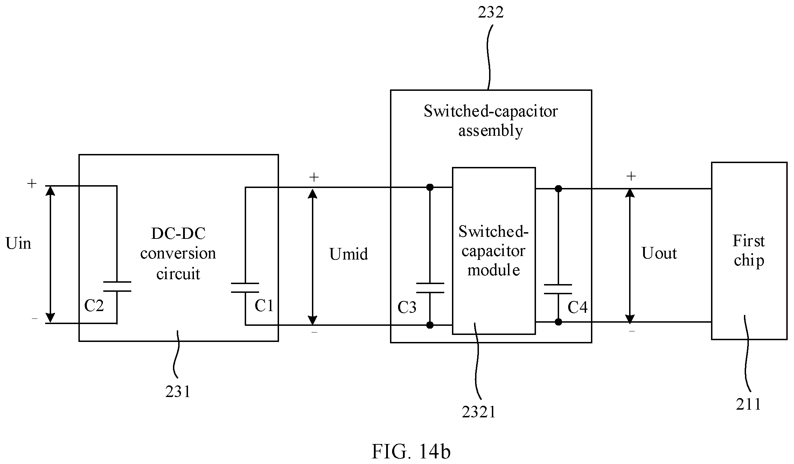

FIG. 14a is a diagram of a structure of a voltage conversion circuit and a first chip according to an embodiment of this application. FIG. 14b is an equivalent circuit schematic of the voltage conversion circuit and the first chip shown in FIG. 14a. Refer to FIG. 14a and FIG. 14b. In this embodiment of this application, the voltage conversion circuit includes a first substrate 221, a second substrate 222, a first chip 211 (namely, a load), and a voltage conversion circuit 230. The second substrate 222 is disposed on the first substrate 221, the first chip 211 is disposed on a side that is of the second substrate 222 and that is opposite to the first substrate 221, the first chip 211 has a power supply pin, and the power supply pin may receive a voltage and supply power to the first chip. The first substrate 221 may be a circuit board (for example, a printed circuit board (Printed Circuit Board, PCB)), and the second substrate 222 is a carrier board (for example, a high-density carrier board of a memory having the first chip 211). In addition, one switched-capacitor assembly is used as an example in FIG. 14b.

To supply power to the first chip 211, the voltage conversion circuit 230 includes a DC-DC conversion circuit 231 and a switched-capacitor assembly 232. Both the DC-DC conversion circuit 231 and the switched-capacitor assembly 232 are disposed on a side that is of the first substrate 221 and that is opposite to the second substrate 222. In addition, an input end of the DC-DC conversion circuit 231 is configured to receive an input voltage Uin, an output end of the DC-DC conversion circuit 231 is connected to an input end of the switched-capacitor assembly 232, and an output end of the switched-capacitor assembly 232 is connected to a power supply pin of the first chip 211, to output a voltage Uout to the power supply pin.

To vertically supply power and reduce a loss on a PDN power supply link, refer to FIG. 14a. An overlapping area may exist between an orthographic projection of the first chip 211 on the first substrate 221 and an orthographic projection of the switched-capacitor assembly 232 on the first substrate 221. In this way, the first chip 211 may have an overlapping area in a stacking direction of the first substrate 221 and the second substrate 222, so that a power supply path between the first chip 211 and the switched-capacitor assembly 232 is shortened as much as possible, thereby reducing path damage and a voltage drop.

Generally, power supply pins of the first chip 211 include a positive power supply pin and a negative power supply pin. To form a current path between the input end of the DC-DC conversion circuit 231 and the switched-capacitor assembly 232, refer to FIG. 14a and FIG. 14b. Signal lines 261, 262, 263, and 264 are disposed on the first substrate 221. A positive input end of the DC-DC conversion circuit 231 may be connected to a first end of the signal line 261 by using soldering tin, a solder ball (for example, a tin solder ball), a bump (for example, a copper pillar micro bump), or the like. A negative input end of the DC-DC conversion circuit 231 may be connected to a first end of the signal line 262 by using soldering tin, a solder ball (for example, a tin solder ball), a bump (for example, a copper pillar micro bump), or the like. Second ends of the signal lines 261 and 262 are configured to receive a power voltage, so that the power voltage can be input to the input end of the DC-DC conversion circuit 231. In addition, a positive output end of the DC-DC conversion circuit 231 may be connected to a first end of the signal line 263 by using soldering tin, a solder ball (for example, a tin solder ball), a bump (for example, a copper pillar micro bump), or the like. A negative output end of the DC-DC conversion circuit 231 may be connected to a first end of the signal line 264 by using soldering tin, a solder ball (for example, a tin solder ball), a bump (for example, a copper pillar micro bump), or the like. A second end of the signal line 263 is connected to a positive input end of the switched-capacitor assembly 232 by using soldering tin, a solder ball (for example, a tin solder ball), a bump (for example, a copper pillar micro bump), or the like. A second end of the signal line 264 is connected to a negative input end of the switched-capacitor assembly 232 by using soldering tin, a solder ball (for example, a tin solder ball), a bump (for example, a copper pillar micro bump), or the like, so that a voltage output by the DC-DC conversion circuit 231 can be transmitted to an input end of the switched-capacitor assembly 232.

To form a current path between the switched-capacitor assembly 232 and the first chip 211, as shown in FIG. 14a and FIG. 14b, a first through hole K1 that penetrates the first substrate 221 is provided in the first substrate 221, and first conductive parts 241 and 242 are disposed in the first through hole K1. In addition, a second through hole K2 that penetrates the second substrate 222 is provided in the second substrate 222, and second conductive parts 251 and 252 are disposed in the second through hole K2. A first end of the first conductive part 241 may be connected to a positive output end of the switched-capacitor assembly 232 by using soldering tin, a solder ball (for example, a tin solder ball), a bump (for example, a copper pillar micro bump), or the like. A second end of the first conductive part 241 may be connected to a first end of the second conductive part 251 by using soldering tin, a solder ball (for example, a tin solder ball), a bump (for example, a copper pillar micro bump), or the like. A second end of the second conductive part 251 may be connected to a positive power supply pin of the first chip 211 by using soldering tin, a solder ball (for example, a tin solder ball), a bump (for example, a copper pillar micro bump), or the like, so as to electrically connect the positive output end of the switched-capacitor assembly 232 to the positive power supply pin of the first chip 211. In addition, a first end of the first conductive part 242 may be connected to a negative output end of the switched-capacitor assembly 232 by using soldering tin, a solder ball (for example, a tin solder ball), a bump (for example, a copper pillar micro bump), or the like. A second end of the first conductive part 242 may be connected to a first end of the second conductive part 252 by using soldering tin, a solder ball (for example, a tin solder ball), a bump (for example, a copper pillar micro bump), or the like. A second end of the second conductive part 252 may be connected to a negative power supply pin of the first chip 211 by using soldering tin, a solder ball (for example, a tin solder ball), a bump (for example, a copper pillar micro bump), or the like, to electrically connect the negative output end of the switched-capacitor assembly 232 to the negative power supply pin of the first chip 211. In this way, a voltage and a current output by the switched-capacitor assembly 232 may be input to the first chip 211 through the first conductive parts 241 and 242 and the second conductive parts 251 and 252, to provide a current and a voltage for the first chip 211. In addition, because the first conductive parts 241 and 242 penetrate from a first surface of the first substrate 221 to a second surface of the first substrate 221, and the second conductive parts 251 and 252 penetrate from a first surface of the second substrate 222 to a second surface of the second substrate 222, a vertical power supply path may be formed between the switched-capacitor assembly 232 and the first chip 211, thereby further vertically supplying power, further shortening the power supply path between the first chip 211 and the switched-capacitor assembly 232, reducing path damage and a voltage drop, and further increasing a current flowing into the first chip 211.

For example, materials of the first conductive part and the second conductive part are metal materials.

In addition, FIG. 14a is merely an example in which the first chip 211 corresponds to a plurality of DC-DC conversion circuits 231 and a plurality of switched-capacitor assemblies 232. Therefore, as shown in FIG. 14a, to improve simplicity of components in the voltage conversion circuit, the plurality of DC-DC conversion circuits 231 may be disposed in mirror symmetry, and the plurality of switched-capacitor assemblies 232 may be disposed in mirror symmetry. In addition, DC-DC conversion circuits 231 are disposed on two sides of the plurality of switched-capacitor assemblies 232.

Further, to improve output stability of the DC-DC conversion circuit and implement filtering, as shown in FIG. 14a and FIG. 14b, the voltage conversion circuit 230 further includes a power output capacitor C1, where the power output capacitor C1 is connected between a positive output end and a negative output end in output ends of the DC-DC conversion circuit 231. For example, the power output capacitor C1 is integrated into the DC-DC conversion circuit 231, so as to reduce an area occupied by the power output capacitor C1 on the first substrate. In addition, during specific implementation, one, two, three, or more power output capacitors C1 may be disposed to satisfy a process requirement. In addition, a capacitance value of the power output capacitor C1 is determined according to a requirement of an actual application scenario, and is not limited herein.

To improve input stability of the DC-DC conversion circuit and implement filtering, as shown in FIG. 14a and FIG. 14b, the voltage conversion circuit 230 further includes a power input capacitor C2, where the power input capacitor C2 is connected between a positive output end and a negative output end in input ends of the DC-DC conversion circuit 231. For example, the power input capacitor C2 is integrated into the DC-DC conversion circuit 231, so as to reduce an area occupied by the power input capacitor C2 on the first substrate. In addition, during specific implementation, one, two, three, or more power input capacitors C2 are disposed to satisfy a process requirement. In addition, a capacitance value of the power input capacitor C2 is determined according to a requirement of an actual application scenario, and is not limited herein.

To improve input stability of the switched-capacitor module and implement filtering, as shown in FIG. 14a and FIG. 14b, the voltage conversion circuit 230 further includes an input filter capacitor C3, where the input filter capacitor C3 is connected between a positive input end and a negative input end in input ends of the switched-capacitor assembly 232. For example, the input filter capacitor C3 is integrated into the switched-capacitor assembly 232, so as to reduce an area occupied by the input filter capacitor C3 on the first substrate. In addition, during specific implementation, one, two, three, or more input filter capacitors C3 are disposed to satisfy a process requirement. In addition, a capacitance value of the input filter capacitor C3 is determined according to a requirement of an actual application scenario, and is not limited herein.

To improve output stability of the switched-capacitor module and implement filtering, as shown in FIG. 14a and FIG. 14b, the voltage conversion circuit 230 further includes an output filter capacitor C4, where the output filter capacitor C4 is connected between a positive output end and a negative output end in output ends of the switched-capacitor assembly 232. For example, the output filter capacitor C4 is integrated into the switched-capacitor assembly 232, so as to reduce an area occupied by the output filter capacitor C4 on the first substrate. In addition, during specific implementation, one, two, three, or more output filter capacitors C4 are disposed to satisfy a process requirement. In addition, a capacitance value of the output filter capacitor C4 is determined according to a requirement of an actual application scenario, and is not limited herein.

In addition, the DC-DC conversion circuit 231 may alternatively be disposed on a side that is of the first substrate 221 and that faces the second substrate 222, or the DC-DC conversion circuit 231 is embedded in the first substrate 221.

It may be understood that, in addition to the power supply pin, the first chip further has one or more signal pins. These signal pins are configured to transmit information such as a control instruction and data, so that the first chip can perform control and computing. Therefore, the first substrate and the second substrate each further include a computing signal line configured to transmit the information, and the signal pin of the first chip is connected to the computing signal line on the second substrate by using soldering tin, a solder ball (for example, a tin solder ball), a bump (for example, a copper pillar micro bump), or the like. The computing signal line on the second substrate is then connected to the computing signal line on the first substrate by using soldering tin, a solder ball (for example, a tin solder ball), a bump (for example, a copper pillar micro bump), or the like, and the computing signal line on the first substrate is then connected to an external circuit. In this way, functions of performing control and calculation by the first chip are implemented.

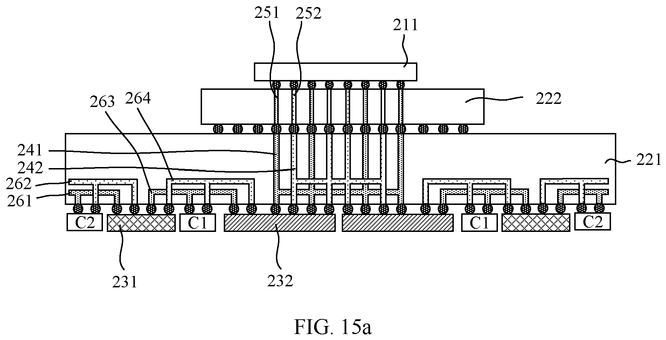

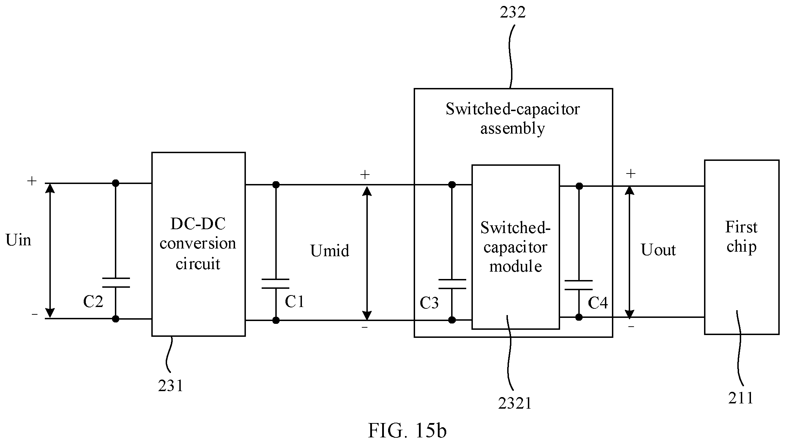

FIG. 15a is a diagram of another structure of a voltage conversion circuit and a first chip according to an embodiment of this application. FIG. 15b is an equivalent circuit schematic of the voltage conversion circuit and the first chip shown in FIG. 15a. Refer to FIG. 15a and FIG. 15b. In this embodiment of this application, the voltage conversion circuit includes a first substrate 221, a second substrate 222, a first chip 211, and a voltage conversion circuit 230. The voltage conversion circuit 230 includes a DC-DC conversion circuit 231 and a switched-capacitor assembly 232. The DC-DC conversion circuit 231 and the switched-capacitor assembly 232 are disposed on a side that is of the first substrate 221 and that is opposite to the second substrate 222. A power input capacitor C2 and a power output capacitor C1 are not integrated into the DC-DC conversion circuit 231, but are disposed on the first substrate 221, thereby improving flexibility of disposing the power input capacitor C2 and the power output capacitor C1. Specifically, a first end of the power input capacitor C2 is connected to a signal line 261 by using soldering tin, a solder ball (for example, a tin solder ball), a bump (for example, a copper pillar micro bump), or the like. A second end of the power input capacitor C2 is connected to a signal line 262 by using soldering tin, a solder ball (for example, a tin solder ball), a bump (for example, a copper pillar micro bump), or the like. A first end of the power output capacitor C1 is connected to a signal line 263 by using soldering tin, a solder ball (for example, a tin solder ball), a bump (for example, a copper pillar micro bump), or the like. A second end of the power output capacitor C1 is connected to a signal line 264 by using soldering tin, a solder ball (for example, a tin solder ball), a bump (for example, a copper pillar micro bump), or the like. Further, an orthographic projection of the power output capacitor C1 on the first substrate 221 and an orthographic projection of the DC-DC conversion circuit 231 on the first substrate 221 do not have an overlapping area. Certainly, the power input capacitor C2 may alternatively be integrated into the DC-DC conversion circuit 231, and the power output capacitor C1 is externally disposed on a second surface of the first substrate 221. Alternatively, the power output capacitor C1 may be integrated into the DC-DC conversion circuit 231, and the power input capacitor C2 is externally disposed on a second surface of the first substrate 221. In addition, an input filter capacitor C3 and an output filter capacitor C4 are integrated into the switched-capacitor assembly 232. In addition, for other structures in this embodiment, refer to the descriptions in the foregoing embodiments. Details are not described herein again.

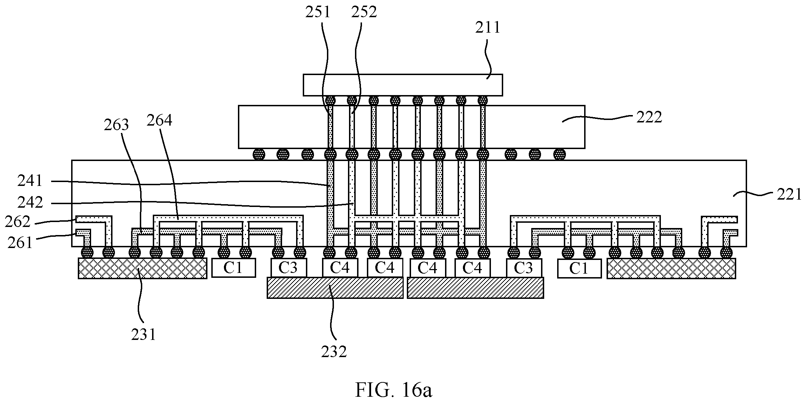

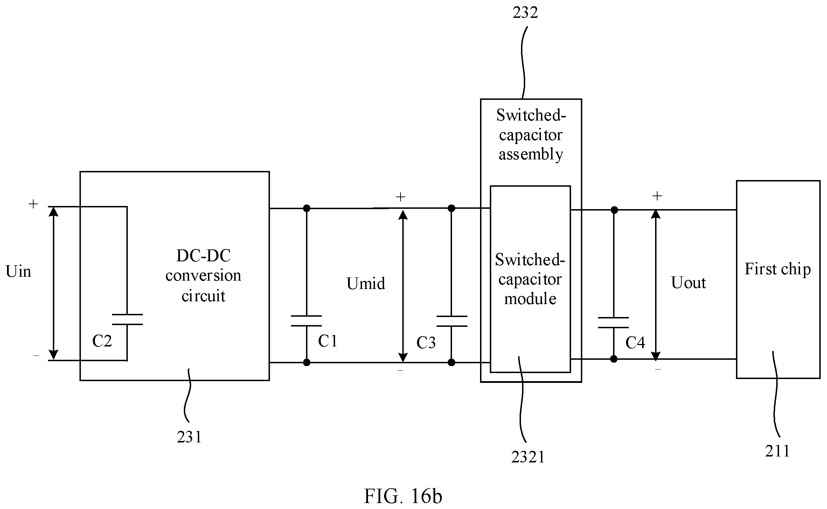

FIG. 16a is a diagram of another structure of a voltage conversion circuit and a first chip according to an embodiment of this application. FIG. 16b is an equivalent circuit schematic of the voltage conversion circuit and the first chip shown in FIG. 16a. Refer to FIG. 16a and FIG. 16b. In this embodiment of this application, the voltage conversion circuit includes a first substrate 221, a second substrate 222, a first chip 211, and a voltage conversion circuit 230. The voltage conversion circuit 230 includes a DC-DC conversion circuit 231 and a switched-capacitor assembly 232. The DC-DC conversion circuit 231 and the switched-capacitor assembly 232 are disposed on a side that is of the first substrate 221 and that is opposite to the second substrate 222. A power output capacitor C1 is not integrated into the DC-DC conversion circuit 231, but is disposed on the first substrate 221, thereby improving flexibility of disposing the power output capacitor C1. In addition, an input filter capacitor C3 and an output filter capacitor C4 are not integrated into the switched-capacitor assembly 232, but are disposed between the switched-capacitor assembly 232 and the first substrate 221, thereby reducing an area occupied by the input filter capacitor C3 and the output filter capacitor C4 on the first substrate, and improving flexibility of disposing the input filter capacitor C3 and the output filter capacitor C4. Specifically, a positive input end of the switched-capacitor assembly 232 is connected to a first end of the input filter capacitor C3, and the first end of the input filter capacitor C3 is further connected to a signal line 263 by using soldering tin, a solder ball (for example, a tin solder ball), a bump (for example, a copper pillar micro bump), or the like. A negative input end of the switched-capacitor assembly 232 is connected to a second end of the input filter capacitor C3, and the second end of the input filter capacitor C3 is further connected to a signal line 264 by using soldering tin, a solder ball (for example, a tin solder ball), a bump (for example, a copper pillar micro bump), or the like. A positive output end of the switched-capacitor assembly 232 is connected to a first end of the output filter capacitor C4, and the first end of the output filter capacitor C4 is further connected to a first end of the first conductive part 241 by using soldering tin, a solder ball (for example, a tin solder ball), a bump (for example, a copper pillar micro bump), or the like. A negative output end of the switched-capacitor assembly 232 is connected to a second end of the output filter capacitor C4, and the second end of the output filter capacitor C4 is further connected to a first end of the first conductive part 242 by using soldering tin, a solder ball (for example, a tin solder ball), a bump (for example, a copper pillar micro bump), or the like. Certainly, the input filter capacitor C3 may alternatively be integrated into the switched-capacitor assembly 232, and the output filter capacitor C4 may be disposed on a second surface of the first substrate 221. Alternatively, the output filter capacitor C4 may be integrated into the switched-capacitor assembly 232, and the input filter capacitor C3 may be disposed on a second surface of the first substrate 221. In addition, the power input capacitor C2 may not be disposed in the voltage conversion circuit 230, or the power input capacitor C2 may be integrated into the DC-DC conversion circuit 231. In addition, for other structures in this embodiment, refer to the descriptions in the foregoing embodiments. Details are not described herein again.

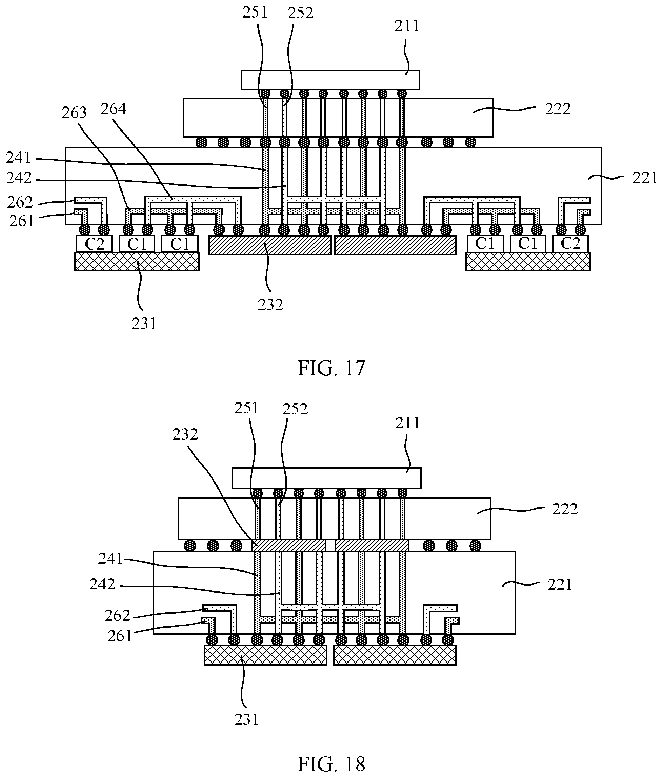

FIG. 17 is a diagram of another structure of a voltage conversion circuit and a first chip according to an embodiment of this application. For an equivalent circuit schematic corresponding to FIG. 17, refer to FIG. 15b. Refer to FIG. 17. In this embodiment of this application, the voltage conversion circuit includes a first substrate 221, a second substrate 222, a first chip 211, and a voltage conversion circuit 230. The voltage conversion circuit 230 includes a DC-DC conversion circuit 231 and a switched-capacitor assembly 232. The DC-DC conversion circuit 231 and the switched-capacitor assembly 232 are disposed on a side that is of the first substrate 221 and that is opposite to the second substrate 222. A power input capacitor C2 and a power output capacitor C1 are not integrated into the DC-DC conversion circuit 231, but are disposed between the DC-DC conversion circuit 231 and the first substrate 221, thereby reducing an area occupied by the power input capacitor C2 and the power output capacitor C1 on the first substrate 221, and improving flexibility of disposing the power input capacitor C2 and the power output capacitor C1. Specifically, a positive input end of the DC-DC conversion circuit 231 is connected to a first end of the power input capacitor C2, and the first end of the power input capacitor C2 is further connected to a signal line 261 by using soldering tin, a solder ball (for example, a tin solder ball), a bump (for example, a copper pillar micro bump), or the like. A negative input end of the DC-DC conversion circuit 231 is connected to a second end of the power input capacitor C2, and the second end of the power input capacitor C2 is further connected to a signal line 262 by using soldering tin, a solder ball (for example, a tin solder ball), a bump (for example, a copper pillar micro bump), or the like. A positive output end of the DC-DC conversion circuit 231 is connected to a first end of the power output capacitor C1, and the first end of the power output capacitor C1 is further connected to a signal line 263 by using soldering tin, a solder ball (for example, a tin solder ball), a bump (for example, a copper pillar micro bump), or the like. A negative output end of the DC-DC conversion circuit 231 is connected to a second end of the power output capacitor C1, and the second end of the power output capacitor C1 is further connected to a signal line 264 by using soldering tin, a solder ball (for example, a tin solder ball), a bump (for example, a copper pillar micro bump), or the like. In addition, for other structures in this embodiment, refer to the descriptions in the foregoing embodiments. Details are not described herein again.

FIG. 18 is a diagram of another structure of a voltage conversion circuit and a first chip according to an embodiment of this application. For an equivalent circuit schematic corresponding to FIG. 18, refer to FIG. 14b. Refer to FIG. 18. In this embodiment of this application, the voltage conversion circuit includes a first substrate 221, a second substrate 222, a first chip 211, and a voltage conversion circuit 230. The voltage conversion circuit 230 includes a DC-DC conversion circuit 231 and a switched-capacitor assembly 232. The DC-DC conversion circuit 231 is disposed on a side that is of the first substrate 221 and that is opposite to the second substrate 222, and the switched-capacitor assembly 232 is disposed between the first substrate 221 and the second substrate 222, to further shorten a power supply path between the switched-capacitor assembly 232 and the first chip 211, reduce a loss, and improve efficiency. Specifically, a first end of the first conductive part 241 is connected to a positive output end of the DC-DC conversion circuit 231 by using soldering tin, a solder ball (for example, a tin solder ball), a bump (for example, a copper pillar micro bump), or the like. A first end of the first conductive part 242 is connected to a negative output end of the DC-DC conversion circuit 231 by using soldering tin, a solder ball (for example, a tin solder ball), a bump (for example, a copper pillar micro bump), or the like. A second end of the first conductive part 241 is connected to a positive input end of the switched-capacitor assembly 232 by using soldering tin, a solder ball (for example, a tin solder ball), a bump (for example, a copper pillar micro bump), or the like. A second end of the first conductive part 242 is connected to a negative input end of the switched-capacitor assembly 232 by using soldering tin, a solder ball (for example, a tin solder ball), a bump (for example, a copper pillar micro bump), or the like. In addition, a first end of the second conductive part 251 is connected to a positive output end of the switched-capacitor assembly 232 by using soldering tin, a solder ball (for example, a tin solder ball), a bump (for example, a copper pillar micro bump), or the like. A first end of the second conductive part 252 is connected to a negative output end of the switched-capacitor assembly 232 by using soldering tin, a solder ball (for example, a tin solder ball), a bump (for example, a copper pillar micro bump), or the like. Further, a power input capacitor C2 and a power output capacitor C1 are further integrated into the DC-DC conversion circuit 231, and an input filter capacitor C3 and an output filter capacitor C4 are further integrated into the switched-capacitor assembly 232. Further, the switched-capacitor assembly 232 may be disposed as a structure of an ultra-thin hybrid ECP (embedded component package), to reduce an overall thickness of the voltage conversion circuit. In addition, for other structures in this embodiment, refer to the descriptions in the foregoing embodiments. Details are not described herein again.

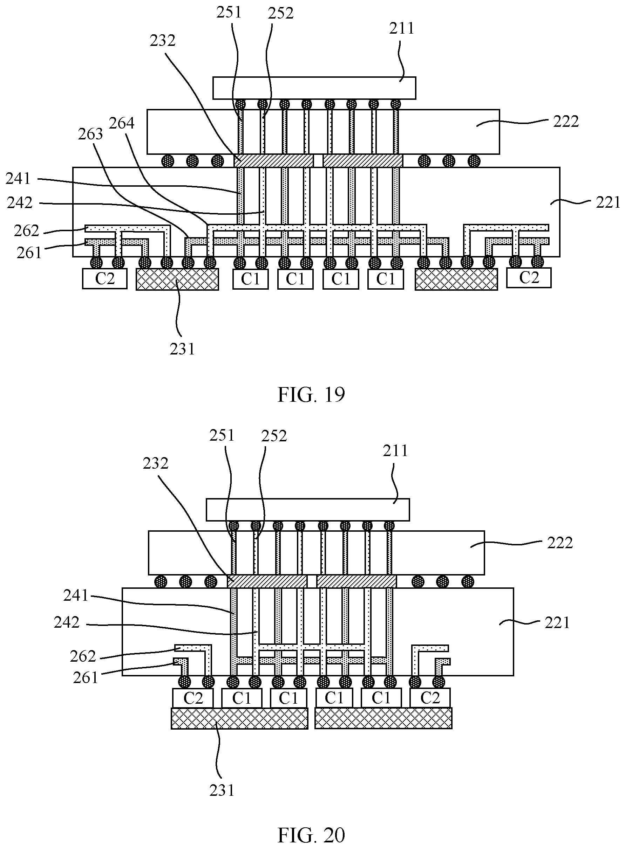

FIG. 19 is a diagram of another structure of a voltage conversion circuit and a first chip according to an embodiment of this application. For an equivalent circuit schematic corresponding to FIG. 19, refer to FIG. 15b. Refer to FIG. 19. In this embodiment of this application, the voltage conversion circuit includes a first substrate 221, a second substrate 222, a first chip 211, and a voltage conversion circuit 230. The voltage conversion circuit 230 includes a DC-DC conversion circuit 231 and a switched-capacitor assembly 232. A switched-capacitor assembly 232 is disposed between the first substrate 221 and the second substrate 222, a DC-DC conversion circuit 231 is disposed on a side that is of the first substrate 221 and that is opposite to the second substrate 222, and a power input capacitor C2 and a power output capacitor C1 are not integrated into the DC-DC conversion circuit 231, but are disposed on the first substrate 221. Specifically, a first end of the power input capacitor C2 is connected to a signal line 261 by using soldering tin, a solder ball (for example, a tin solder ball), a bump (for example, a copper pillar micro bump), or the like. A second end of the power input capacitor C2 is connected to a signal line 262 by using soldering tin, a solder ball (for example, a tin solder ball), a bump (for example, a copper pillar micro bump), or the like. A first end of the power output capacitor C1 is connected to a first end of the first conductive part 241 by using soldering tin, a solder ball (for example, a tin solder ball), a bump (for example, a copper pillar micro bump), or the like. A second end of the power output capacitor C1 is connected to a first end of the first conductive part 242 by using soldering tin, a solder ball (for example, a tin solder ball), a bump (for example, a copper pillar micro bump), or the like. In addition, a positive input end of the DC-DC conversion circuit 231 is connected to a signal line 263 by using soldering tin, a solder ball (for example, a tin solder ball), a bump (for example, a copper pillar micro bump), or the like. A negative input end of the DC-DC conversion circuit 231 is connected to a signal line 264 by using soldering tin, a solder ball (for example, a tin solder ball), a bump (for example, a copper pillar micro bump), or the like. The signal line 263 is connected to a first conductive part 241 in the first substrate 221, and the signal line 264 is connected to a first conductive part 242 in the first substrate 221. Certainly, the power input capacitor C2 and the power output capacitor C1 may alternatively be integrated into the DC-DC conversion circuit 231 or not disposed directly, so as to reduce a quantity of capacitors and reduce costs. Further, the switched-capacitor assembly 232 may be disposed as a structure of an ultra-thin hybrid ECP (embedded component package), to reduce an overall thickness of the voltage conversion circuit. In addition, for other structures in this embodiment, refer to the descriptions in the foregoing embodiments. Details are not described herein again.

FIG. 20 is a diagram of another structure of a voltage conversion circuit and a first chip according to an embodiment of this application. For an equivalent circuit schematic corresponding to FIG. 20, refer to FIG. 15b. Refer to FIG. 20. In this embodiment of this application, the voltage conversion circuit includes a first substrate 221, a second substrate 222, a first chip 211, and a voltage conversion circuit 230. The voltage conversion circuit 230 includes a DC-DC conversion circuit 231 and a switched-capacitor assembly 232. The switched-capacitor assembly 232 is disposed between the first substrate 221 and the second substrate 222, the DC-DC conversion circuit 231 is disposed on a side that is of the first substrate 221 and that is opposite to the second substrate 222, and the power input capacitor C2 and the power output capacitor C1 are not integrated into the DC-DC conversion circuit 231, but are disposed between the first substrate 221 and the DC-DC conversion circuit 231. In addition, a positive input end of the DC-DC conversion circuit 231 is connected to a first end of the power input capacitor C2, a negative input end of the DC-DC conversion circuit 231 is connected to a second end of the power input capacitor C2, and the first end of the power input capacitor C2 is connected to a signal line 261 by using soldering tin, a solder ball (for example, a tin solder ball), a bump (for example, a copper pillar micro bump), or the like. The second end of the power input capacitor C2 is connected to a signal line 262 by using soldering tin, a solder ball (for example, a tin solder ball), a bump (for example, a copper pillar micro bump), or the like. A positive output end of the DC-DC conversion circuit 231 is connected to a first end of the power output capacitor C1, a negative output end of the DC-DC conversion circuit 231 is connected to a second end of the power output capacitor C1, and the first end of the power output capacitor C1 is connected to a first end of the first conductive part 241 by using soldering tin, a solder ball (for example, a tin solder ball), a bump (for example, a copper pillar micro bump), or the like. The second end of the power output capacitor C1 is connected to a first end of the first conductive part 242 by using soldering tin, a solder ball (for example, a tin solder ball), a bump (for example, a copper pillar micro bump), or the like. In addition, the power input capacitor C2 and the power output capacitor C1 may alternatively be integrated into the DC-DC conversion circuit 231 or not disposed directly, so as to reduce a quantity of capacitors and reduce costs. Further, the power input capacitor C2 and the power output capacitor C1 may be connected based on an RDL (Re-distributed layer, re-distributed layer). Further, the switched-capacitor assembly 232 may be disposed as a structure of an ultra-thin hybrid ECP (embedded component package), to reduce an overall thickness of the voltage conversion circuit. In addition, for other structures in this embodiment, refer to the descriptions in the foregoing embodiments. Details are not described herein again.

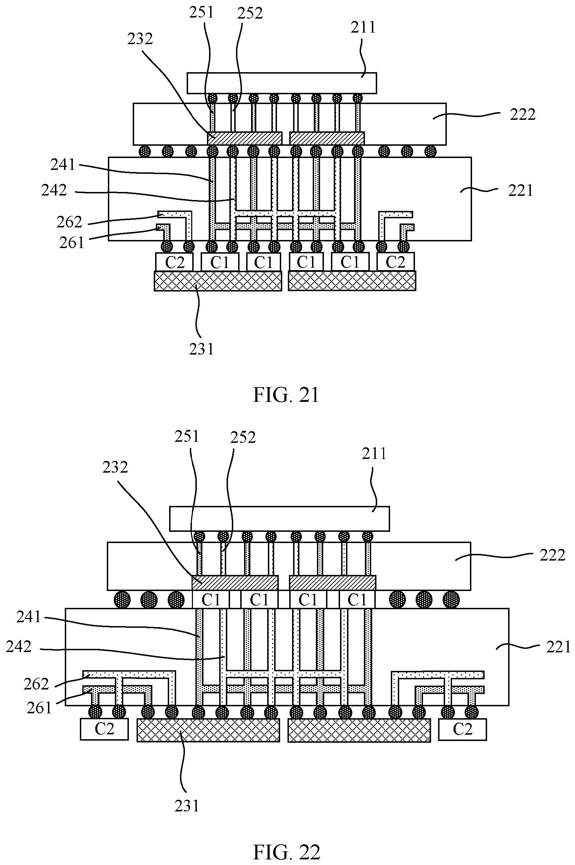

FIG. 21 is a diagram of another structure of a voltage conversion circuit and a first chip according to an embodiment of this application. For an equivalent circuit schematic corresponding to FIG. 21, refer to FIG. 15b. Refer to FIG. 21. In this embodiment of this application, the voltage conversion circuit includes a first substrate 221, a second substrate 222, a first chip 211, and a voltage conversion circuit 230. The voltage conversion circuit 230 includes a DC-DC conversion circuit 231 and a switched-capacitor assembly 232. The switched-capacitor assembly 232 is embedded in the second substrate 222, the DC-DC conversion circuit 231 is disposed on a side that is of the first substrate 221 and that is opposite to the second substrate 222, and a power input capacitor C2 and a power output capacitor C1 are not integrated into the DC-DC conversion circuit 231, but are disposed between the first substrate 221 and the DC-DC conversion circuit 231. In addition, a positive input end of the switched-capacitor assembly 232 is connected to a second end of the first conductive part 241 by using soldering tin, a solder ball (for example, a tin solder ball), a bump (for example, a copper pillar micro bump), or the like. A negative input end of the switched-capacitor assembly 232 is connected to a second end of the first conductive part 242 by using soldering tin, a solder ball (for example, a tin solder ball), a bump (for example, a copper pillar micro bump), or the like. A positive output end of the switched-capacitor assembly 232 is connected to a first end of the second conductive part 251 by using a connection line in the second substrate 222. A negative output end of the switched-capacitor assembly 232 is connected to a first end of the second conductive part 252 by using a connection line in the second substrate 222. Further, the switched-capacitor assembly 232 may be disposed as a structure of an ultra-thin hybrid ECP (embedded component package), to reduce an overall thickness of the voltage conversion circuit. In addition, for other structures in this embodiment, refer to the descriptions in the foregoing embodiments. Details are not described herein again.

FIG. 22 is a diagram of another structure of a voltage conversion circuit and a first chip according to an embodiment of this application. For an equivalent circuit schematic corresponding to FIG. 22, refer to FIG. 15b. Refer to FIG. 22. In this embodiment of this application, the voltage conversion circuit includes a first substrate 221, a second substrate 222, a first chip 211, and a voltage conversion circuit 230. The voltage conversion circuit 230 includes a DC-DC conversion circuit 231 and a switched-capacitor assembly 232. The switched-capacitor assembly 232 is embedded in the second substrate 222, the DC-DC conversion circuit 231 is disposed on a side that is of the first substrate 221 and that is opposite to the second substrate 222, a power input capacitor C2 and a power output capacitor C1 are not integrated into the DC-DC conversion circuit 231, the power input capacitor C2 is disposed on the first substrate 221, and the power output capacitor C1 is disposed between the switched-capacitor assembly 232 and the first substrate 221. Specifically, a second end of the first conductive part 241 is connected to a first end of the power output capacitor C1 by using soldering tin, a solder ball (for example, a tin solder ball), a bump (for example, a copper pillar micro bump), or the like. A second end of the first conductive part 242 is connected to a second end of the power output capacitor C1 by using soldering tin, a solder ball (for example, a tin solder ball), a bump (for example, a copper pillar micro bump), or the like. In addition, the first end of the power output capacitor C1 is connected to a positive input end of the switched-capacitor assembly 232 by using soldering tin, a solder ball (for example, a tin solder ball), a bump (for example, a copper pillar micro bump), or the like. The second end of the power output capacitor C1 is connected to a negative input end of the switched-capacitor assembly 232 by using soldering tin, a solder ball (for example, a tin solder ball), a bump (for example, a copper pillar micro bump), or the like. Further, to reduce a loss on a power supply link, an orthographic projection of the DC-DC conversion circuit 231 on the first substrate 221 and an orthographic projection of the switched-capacitor assembly 232 on the first substrate 221 have an overlapping area. Further, the switched-capacitor assembly 232 may be disposed as a structure of an ultra-thin hybrid ECP (embedded component package), to reduce an overall thickness of the voltage conversion circuit. In addition, for other structures in this embodiment, refer to the descriptions in the foregoing embodiments. Details are not described herein again.

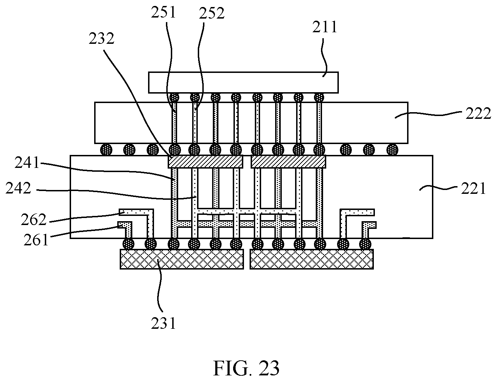

FIG. 23 is a diagram of another structure of a voltage conversion circuit and a first chip according to an embodiment of this application. For an equivalent circuit schematic corresponding to FIG. 23, refer to FIG. 14b. Refer to FIG. 23. In this embodiment of this application, the voltage conversion circuit includes a first substrate 221, a second substrate 222, a first chip 211, and a voltage conversion circuit 230. The voltage conversion circuit 230 includes a DC-DC conversion circuit 231 and a switched-capacitor assembly 232. The switched-capacitor assembly 232 is embedded in the first substrate 221, and the DC-DC conversion circuit 231 is disposed on a side that is of the first substrate 221 and that is opposite to the second substrate 222. Specifically, a second end of the first conductive part 241 is connected to a positive input end of the switched-capacitor assembly 232, and a second end of the first conductive part 242 is connected to a negative input end of the switched-capacitor assembly 232. In addition, the positive input end of the switched-capacitor assembly 232 is connected to a first end of the second conductive part 251 by using soldering tin, a solder ball (for example, a tin solder ball), a bump (for example, a copper pillar micro bump), or the like. The negative input end of the switched-capacitor assembly 232 is connected to a first end of the second conductive part 252 by using soldering tin, a solder ball (for example, a tin solder ball), a bump (for example, a copper pillar micro bump), or the like. Further, the switched-capacitor assembly 232 may be disposed as a structure of an ultra-thin hybrid ECP (embedded component package), to reduce an overall thickness of the voltage conversion circuit. In addition, for other structures in this embodiment, refer to the descriptions in the foregoing embodiments. Details are not described herein again.

The foregoing content is merely specific implementations of this application, but are not intended to limit the protection scope of this application. Any variation or replacement readily figured out by a person skilled in the art within the technical scope disclosed in this application shall fall within the protection scope of this application.

## Claims

1. A switched-capacitor assembly, comprising Q switched-capacitor modules, wherein input ends of the Q switched-capacitor modules are connected in parallel to serve as an input end of the switched-capacitor assembly, output ends of the Q switched-capacitor modules are connected in parallel to serve as an output end of the switched-capacitor assembly, Q is an integer and Q≥1; and the output end of the switched-capacitor assembly is configured to connect to a load;
the switched-capacitor module comprises N switched-capacitor circuits, wherein input ends of the N switched-capacitor circuits are connected to an input end of the switched-capacitor module, output ends of the N switched-capacitor circuits are connected to an output end of the switched-capacitor module, and N is an integer and N≥1; and
the Q switched-capacitor modules are configured to respond to interleaved control, and a reciprocal of current change time of the load is less than Q*N*Fsw; or the Q switched-capacitor modules are configured to respond to non-interleaved control, and a reciprocal of current change time of the load is less than N*Fsw, wherein Fsw represents a switching frequency of the switched-capacitor circuit.

2. The switched-capacitor assembly according to claim 1, wherein the switched-capacitor circuit is a resonant switched-capacitor circuit.

3. The switched-capacitor assembly according to claim 2, wherein the resonant switched-capacitor circuit comprises a first switching transistor, a second switching transistor, a third switching transistor, a third switching transistor, an energy storage capacitor, a first filter capacitor, a second filter capacitor, and an inductor;
a control electrode of the first switching transistor is configured to receive a first switching signal, wherein a first electrode of the first switching transistor is connected to a positive input end in input ends of the resonant switched-capacitor circuit and a first electrode of the first filter capacitor, and a second electrode of the first switching transistor is connected to a first electrode of the second switching transistor and a first electrode of the energy storage capacitor;
a control electrode of the second switching transistor is configured to receive a second switching signal, and a second electrode of the second switching transistor is connected to a first electrode of the third switching transistor and a first end of the inductor;
a control electrode of the third switching transistor is configured to receive a third switching signal, and a second electrode of the third switching transistor is connected to a first electrode of the fourth switching transistor and a second electrode of the energy storage capacitor;
a control electrode of the fourth switching transistor is configured to receive a fourth switching signal, and a second electrode of the fourth switching transistor is connected to a second electrode of the second filter capacitor and a negative input end in the input ends of the resonant switched-capacitor circuit; and
a second electrode of the first filter capacitor is connected to a first electrode of the second filter capacitor and a second end of the inductor.

4. The switched-capacitor assembly according to claim 2, wherein the resonant switched-capacitor circuit comprises a first switching transistor, a second switching transistor, a third switching transistor, a third switching transistor, an energy storage capacitor, a first filter capacitor, a second filter capacitor, and an inductor;
a control electrode of the first switching transistor is configured to receive a first switching signal, wherein a first electrode of the first switching transistor is connected to a positive input end in input ends of the resonant switched-capacitor circuit and a first electrode of the first filter capacitor, and a second electrode of the first switching transistor is connected to a first electrode of the second switching transistor and a first end of the inductor;
a second end of the inductor is connected to a first electrode of the energy storage capacitor;
a control electrode of the second switching transistor is configured to receive a second switching signal, wherein a second electrode of the second switching transistor is connected to a first electrode of the third switching transistor, a second electrode of the first filter capacitor, and a first electrode of the second filter capacitor;
a control electrode of the third switching transistor is configured to receive a third switching signal, and a second electrode of the third switching transistor is connected to a first electrode of the fourth switching transistor and a second electrode of the energy storage capacitor; and
a control electrode of the fourth switching transistor is configured to receive a fourth switching signal, and a second electrode of the fourth switching transistor is connected to a second electrode of the second filter capacitor and a negative input end in the input ends of the resonant switched-capacitor circuit.

5. A voltage conversion circuit, comprising a DC-DC conversion circuit and the switched-capacitor assembly according to any one of claims 1 to 4, wherein an input end of the DC-DC conversion circuit is configured to receive an input voltage, an output end of the DC-DC conversion circuit is connected to the input end of the switched-capacitor assembly, and the output end of the switched-capacitor assembly is configured to connect to the load;
the DC-DC conversion circuit is configured to: perform buck conversion on the input voltage and then output a converted voltage to the switched-capacitor assembly; and
the switched-capacitor assembly is configured to perform buck conversion on an input voltage and then output a converted voltage to the load.

6. The voltage conversion circuit according to claim 5, wherein the DC-DC conversion circuit is further configured to adjust a voltage at the output end of the DC-DC conversion circuit in response to the voltage at the output end of the DC-DC conversion circuit not meeting a first voltage threshold; and
the switched-capacitor assembly is configured to adjust a voltage at the output end of the switched-capacitor assembly in response to the voltage at the output end of the switched-capacitor assembly not meeting a second voltage threshold.

7. The voltage conversion circuit according to claim 5, wherein the DC-DC conversion circuit is further configured to adjust a voltage at the output end of the DC-DC conversion circuit in response to a voltage at the output end of the switched-capacitor assembly not meeting a second voltage threshold; and
the switched-capacitor assembly is configured to adjust a voltage at the output end of the switched-capacitor assembly in response to the voltage at the output end of the switched-capacitor assembly not meeting the second voltage threshold.

8. The voltage conversion circuit according to claim 6 or 7, wherein the switched-capacitor assembly is further configured to send a linkage voltage adjustment instruction to the DC-DC conversion circuit in response to adjusting, by the switched-capacitor assembly, the voltage at the output end of the switched-capacitor assembly; and
the DC-DC conversion circuit is further configured to adjust the voltage at the output end of the DC-DC conversion circuit in response to the linkage voltage adjustment instruction.

9. The voltage conversion circuit according to claim 8, wherein the switched-capacitor assembly is further configured to: send a linkage voltage adjustment instruction carrying buck information to the DC-DC conversion circuit in response to adjusting, by the switched-capacitor assembly, the voltage at the output end of the switched-capacitor assembly to decrease; and
the DC-DC conversion circuit is further configured to decrease the voltage at the output end of the DC-DC conversion circuit in response to the linkage voltage adjustment instruction carrying the buck information.

10. The voltage conversion circuit according to claim 8 or 9, wherein the switched-capacitor assembly is further configured to send a linkage voltage adjustment instruction carrying boost information to the DC-DC conversion circuit in response to adjusting, by the switched-capacitor assembly, the voltage at the output end of the switched-capacitor assembly to increase; and
the DC-DC conversion circuit is further configured to increase the voltage at the output end of the DC-DC conversion circuit in response to the linkage voltage adjustment instruction carrying the boost information.

11. The voltage conversion circuit according to any one of claims 8 to 10, wherein the switched-capacitor assembly is further configured to: in response to the voltage at the output end of the switched-capacitor assembly not meeting the second voltage threshold, control one or more of a phase, a switching frequency, and a duty cycle that correspond to the switched-capacitor circuit to be adjusted from a specified value to a target value, and adjust the voltage at the output end of the switched-capacitor assembly; and after the DC-DC conversion circuit adjusts the voltage at the output end of the DC-DC conversion circuit in response to the linkage voltage adjustment instruction, adjust one or more of the phase, the switching frequency, and the duty cycle from the target value to the specified value.

12. The voltage conversion circuit according to claim 5, wherein the DC-DC conversion circuit is further configured to adjust a voltage at the output end of the DC-DC conversion circuit in response to a voltage at the output end of the switched-capacitor assembly not meeting a second voltage threshold.

13. The voltage conversion circuit according to claim 5, wherein the DC-DC conversion circuit is further configured to adjust a voltage at the output end of the DC-DC conversion circuit based on a current at the output end of the switched-capacitor assembly.

14. The voltage conversion circuit according to claim 5, wherein the DC-DC conversion circuit is further configured to adjust a voltage at the output end of the DC-DC conversion circuit based on a current at the output end of the switched-capacitor assembly and a first voltage adjustment instruction output by the load.

15. The voltage conversion circuit according to any one of claims 5 to 14, wherein the DC-DC conversion circuit comprises an LLC resonant converter or a double-current rectifier converter.

16. An electronic device, comprising a circuit board and the voltage conversion circuit according to any one of claims 5 to 15, wherein the voltage conversion circuit is disposed on the circuit board.
